Europäisches Patentamt

(19) European Patent Office

Office européen des brevets

(11) **EP 0 814 413 A1**

## (12) EUROPEAN PATENT APPLICATION
published in accordance with Art. 158(3) EPC

(43) Date of publication:
29.12.1997 Bulletin 1997/52

(21) Application number: 97900042.9

(22) Date of filing: 07.01.1997

(51) Int. Cl.6: **G06F 17/00**

(86) International application number:
PCT/JP97/00010

(87) International publication number:
WO 97/25676 (17.07.1997 Gazette 1997/31)

(84) Designated Contracting States:
DE FR GB IT NL

(30) Priority: 08.01.1996 JP 572/96
25.01.1996 JP 10552/96

(71) Applicant:
MATSUSHITA ELECTRIC INDUSTRIAL CO., LTD.
Kadoma-shi, Osaka-fu, 571 (JP)

(72) Inventors:
• OBARA, Kazuaki
Neyagawa-shi, Osaka 572 (JP)
• WATANABE, Tatsumi
Seika-cho, Souraku-gun, Kyoto 619-02 (JP)
• ISAJI, Kazuhide
Osaka-shi, Osaka 533 (JP)

(74) Representative:
Eisenführ, Speiser & Partner
Martinistrasse 24
28195 Bremen (DE)

## (54) TIME-SERIES SIGNAL PREDICTING APPARATUS

(57) Disclosed is a time series signal predicting apparatus for predicting time series data of the future based on past time series data and current time series data. Vector generating means generates n-dimensional vector data based on a natural number of n inputted time series data and stores them into vector storage means, while further vector generating means generates (n+1)-dimensional vector data based on inputted past time series data, classifies them into a plurality of L vector sets in units of similar vectors by using up to n-dimensional vector data, and stores them into vector set storage means. Subsequently, vector classifying means classifies input vector data according to which vector set they belong to, and vector selecting means selects a plurality of k vector data in a descending order of similarity to the vector data of newly inputted time series data, from a vector set belonging to vector sets to which the vector data have been decided to belong. Then, past data extracting means extracts a plurality of k (n+1)-th-dimensional data from a plurality of k (n+1)-dimensional vectors belonging to the selected vector set, and outputting the extracted data together with their similarities, and data predicting means predicts and outputs time series data of the next time succeeding to the inputted time series data based on the plurality of k extracted data, the input vector data and the similarities.

*Fig.1*

First Preferred Embodiment

## Description

TECHNICAL FIELD

The present invention relates to a time series signal predicting apparatus for predicting time series data of the future based on time series data of the past and the present.

BACKGROUND ART

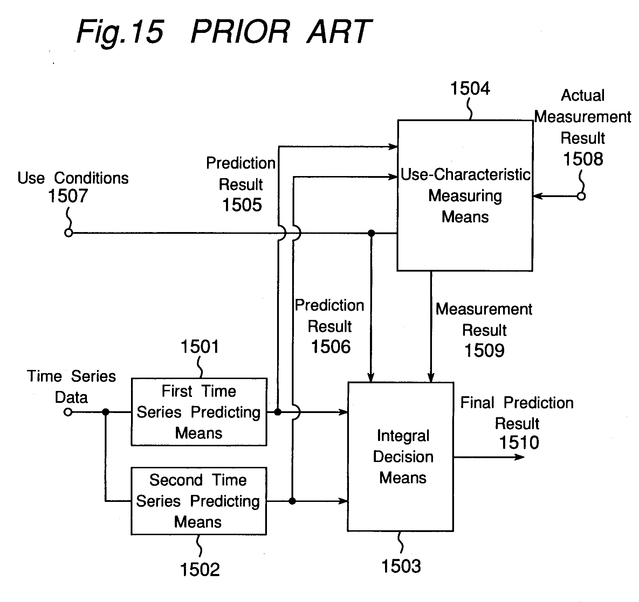

A time series signal predicting apparatus of the prior art has been disclosed in, for example, Japanese Patent Laid-Open Publication No. HEISEI 7-84983. Construction of this time series signal predicting apparatus of the prior art is shown in Fig. 15. The time series signal predicting apparatus of the prior art, as shown in Fig. 15, comprises:

(a) first time series predicting means 1501 built by using a feed forward type neural network;
(b) second time series predicting means 1502 built by using an ARMA (Auto Regressive Moving Average) model;
(c) use-characteristic measuring means 1504 for, based on use conditions 1507, prediction results 1505, 1506 of the first and second time series predicting means 1501, 1502 and an actual measurement result 1508, comparing each of the prediction results 1505, 1506 with the actual measurement result 1508 for each of the use conditions 1507, thereby measuring the superiority or inferiority of predicting ability dependent on the use conditions 1507 for each of the time series predicting means 1501, 1502; and
(d) integral decision means 1503 for, based on the use conditions 1507, the prediction results 1505, 1506 and a measurement result 1509 by the use-characteristic measuring means 1504, integrating the prediction results 1505, 1506 by using a weighted addition method and outputting a final prediction result 1510.

In the time series signal predicting apparatus of the prior art constructed as described above, with two different time series predicting means 1501, 1502 provided, the prediction results 1505, 1506 predicted by these two time series predicting means 1501, 1502 are weighted and added up depending on use conditions, by which improvement in the prediction precision is designed for the time series signal predicting apparatus.

However, the time series signal predicting apparatus of the prior art needs to be provided with a plurality of prediction means for the improvement in the prediction precision, which would result in a complex system construction. Also, upon the occurrence of changes in statistical properties such as the average and variance of input time series signals, the time series signal predicting apparatus, which has no means for incorporating the changes in the statistical properties of the time series signal, would encounter a problem that the precision of predicted time series signals would deteriorate to a large extent.

An object of the present invention is to provide a time series signal predicting apparatus which is enabled to solve the foregoing problems and to fulfill the time series signal prediction at high precision with simple construction, as compared with the apparatus of the prior art, and moreover to predict a time series signal at higher precision even upon occurrence of changes in statistical properties of time series signals.

According to the first invention of the present invention, there is provided a time series signal predicting apparatus comprising:

vector generating means for generating n-dimensional vector data based on a natural number of n time series data sampled every regular time intervals and inputted;
further vector generating means for generating (n+1)-dimensional vector data based on past time series data sampled every regular time intervals and inputted, and classifying the vector data into a plurality of L vector sets in units of similar vectors by using vector data of up to the n-th dimension;
vector storage means for storing the n-dimensional input vector data generated by the vector generating means;
vector set storage means for storing the (n+1)-dimensional vector data generated by the further vector generating means in units of a plurality of L classified vector sets;
vector classifying means for classifying the vector data stored in the vector storage means according to which vector set out of the vector sets stored in the vector set storage means the vector data belong to;
vector selecting means for selecting a plurality of k vector data from a vector set belonging to the vector sets to which the vector data stored in the vector storage means have been decided to belong, in a descending order of similarities to vector data of newly inputted time series data;
past data extracting means for extracting a plurality of k (n+1)-th-dimensional data from a plurality of k (n+1)-dimensional vectors belonging to the vector set selected by the vector selecting means, and outputting the extracted data together with the similarities; and
data predicting means for predicting and outputting time series data of a next time point succeeding to the inputted time series data based on the plurality of k data extracted by the past data extracting means, the input vector data stored in the vector storage means and the similarities.

Therefore, according to the present invention, the time series signal predicting apparatus is enabled to achieve a high-precision time series signal prediction with simple construction, as compared with the apparatus of the prior art, and moreover to predict a time series signal at high precision even upon occurrence of changes in statistical properties of time series signals.

BRIEF DESCRIPTION OF THE DRAWINGS

Fig. 1 is a block diagram showing the construction of a time series signal predicting apparatus which is a first preferred embodiment according to the present invention;
Fig. 2 is a block diagram showing the construction of a time series signal predicting apparatus which is a second preferred embodiment according to the present invention;
Fig. 3 is a block diagram showing the construction of a time series signal predicting apparatus which is a third preferred embodiment according to the present invention;
Fig. 4 is an arrangement diagram of a neural network constituting further data predicting means 303 of Fig. 3;
Fig. 5 is a block diagram showing the construction of a time series signal predicting apparatus which is a fourth preferred embodiment according to the present invention;
Fig. 6 is a block diagram showing the construction of a time series signal predicting apparatus which is a fifth preferred embodiment according to the present invention;
Fig. 7 is a block diagram showing the construction of a time series signal predicting apparatus which is a sixth preferred embodiment according to the present invention;
Fig. 8 is a block diagram showing the construction of a time series signal predicting apparatus which is a modification of the sixth preferred embodiment according to the present invention;
Fig. 9 is a block diagram showing the construction of a time series signal predicting apparatus which is a seventh preferred embodiment according to the present invention;
Fig. 10 is an arrangement diagram of a neural network constituting the data predicting means 108 in Fig. 1, Fig. 2 and Figs. 5 through 9;
Fig. 11 is a block diagram showing the construction of a time series signal predicting apparatus which is an eighth preferred embodiment according to the present invention;
Fig. 12 is a view showing an operation example of the time series signal predicting apparatus of Fig. 11, where Figs. 12 (a), 12 (b), 12 (c) are graphs showing vectors $V_1$, $V_2$, $V_3$ of past traffic amounts versus time, and Figs. 12 (d), 12 (e) are graphs showing template vectors resulting from rearranging the vectors $V_1$, $V_2$, $V_3$;
Fig. 13, showing an operation example of the time series signal predicting apparatus of Fig. 11, is a graph showing the reliability $\eta$ versus variation reference amount $x_i$;
Fig. 14 is an arrangement diagram of a neural network constituting the traffic amount predicting means 1105 of Fig. 11; and
Fig. 15 is a block diagram showing the construction of a time series signal predicting apparatus according to the prior art.

BEST MODE FOR CARRYING OUT THE INVENTION

Preferred embodiments according to the present invention will now be described with reference to the accompanying drawings.

FIRST PREFERRED EMBODIMENT

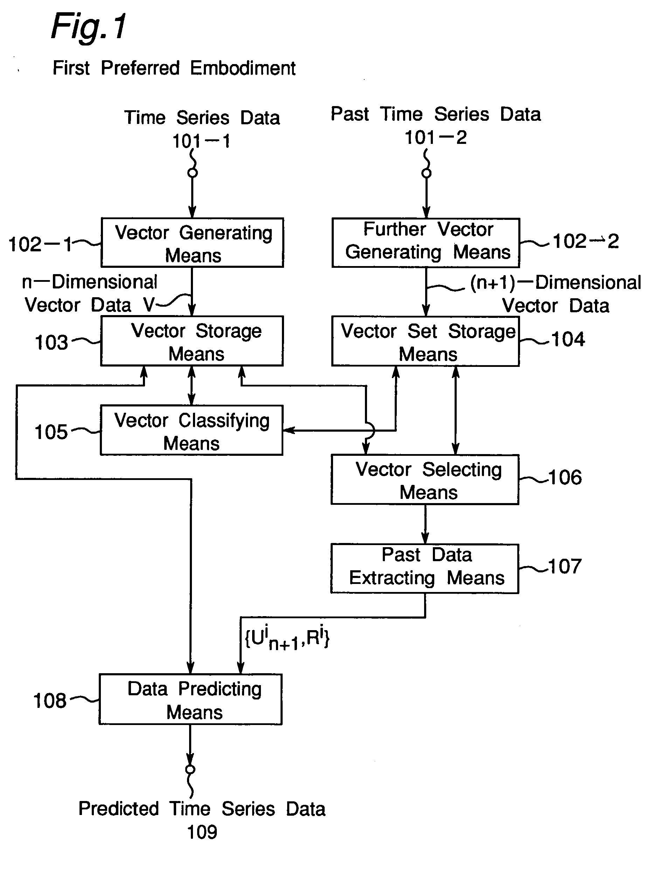

Fig. 1 is a block diagram showing the construction of a time series signal predicting apparatus which is a first preferred embodiment according to the present invention. Referring to Fig. 1, the time series signal predicting apparatus of this preferred embodiment comprises:

(a) vector generating means 102-1 for generating n-dimensional vector data V based on a natural number of n time series data 101-1 sampled every regular time intervals and inputted;
(b) further vector generating means 102-2 for generating (n+1)-dimensional vector data based on past time series data 101-2 sampled every regular time intervals and inputted, and classifying the resulting vector data into a plurality of L vector sets $P_i$ in units of similar vectors by using up to n-dimensional vector data;
(c) vector storage means 103 for storing the n-dimensional vector data V generated by the vector generating means

3

102-1;

(d) vector set storage means 104 for storing the (n+1)-dimensional vector data generated by the further vector generating means 102-2 in units of the plurality of L classified vector sets $P_i$;

(e) vector classifying means 105 for classifying the vector data V stored in the vector storage means 103 according to which vector set $P_i$ stored in the vector set storage means 104 the vector data V belong to;

(f) vector selecting means 106 for selecting a plurality of k vector data in descending order of similarity to vector data V of newly inputted time series data, from vector sets belonging to a vector set s to which the vector data V stored in the vector storage means 103 have been decided to belong to;

(g) past data extracting means 107 for extracting a plurality of k (n+1)-th-dimensional data $U^i_{n+1}$ (i=1, 2, · · ·, k) from a plurality of k (n+1)-dimensional vectors belonging to the vector set s selected by the vector selecting means 106, and outputting the extracted data together with the similarities $R^i$ (i=1, 2, · · ·, k); and

(h) data predicting means 108 for predicting and outputting time series data of the next time (n+1) succeeding to the inputted time series data 101-1 based on the plurality of k data $U^i_{n+1}$ (i=1, 2, · · ·, k) extracted by the past data extracting means 107, the input vector data V stored in the vector storage means 103 and the similarities $R^i$ (i=1, 2, · · ·, k).

The operation of the time series signal predicting apparatus of the first preferred embodiment constructed as described above will be explained below. The inputted time series data 101-1 is converted by the vector generating means 102-1 into n-dimensional vector data V, which are vector data in units of a plurality of n vector data, and then stored in the vector storage means 103. The past time series data 101-2 prior to the start of prediction is inputted to the further vector generating means 102-2. The further vector generating means 102-2 converts the past time series data 101-2 into (n+1)-dimensional vector data, and moreover classifies the converted (n+1)-dimensional vector data into L vector sets $P_i$ in units of similar vectors by using vector elements of up to n-dimensional vector data. After that, the further vector generating means 102-2 stores the converted (n+1)-dimensional vector data in units of the classified L vector sets $P_i$ into the vector set storage means 104.

As the method for calculating the similarity in the further vector generating means 102-2, various types of known clustering methods are available. These various types of clustering methods may be selected from a wide variety of clustering methods such as a known LBG algorithm disclosed in Prior Art Reference 1, "Pattern Recognition and Learning Algorithm," by Kamisaka et al., published by Sogou Shuppan, May 1990, pp. 114-115.

The vector classifying means 105 compares the inputted vector data V of the current time stored in the vector storage means 103 with the vector data stored in the vector set storage means 104 to decide which vector set $P_i$ the inputted vector data V belong to. The vector selecting means 106 selects a plurality of k vector data having higher similarities to the input vector data V, from a vector set T to which the vectors V belong. In this case, Euclidean distance is used as the scale for the similarity among the vector data V. That is, Euclidean distances between the inputted vector data V and the n-dimensional vector data belonging to the set T out of the (n+1)-dimensional vector data are calculated, and then a plurality of k vector data having a plurality of k smallest distances are selected. Subsequently, the plurality of k (n+1)-dimensional vector data selected by the vector selecting means 106 are inputted to the past data extracting means 107, and the past data extracting means 107 extracts a plurality of k selected (n+1)-th time series data $U^i_{n+1}$ (i=1, 2, · · ·, k), and outputs them together with the similarities $R^i$ (i=1, 2, · · ·, k) to the data predicting means 108.

Based on the plurality of k time series data $U^i_{n+1}$ (i=1, 2, · · ·, k) extracted by the past data extracting means 107, the input vector data V stored in the vector storage means 103 and the similarities $R^i$ (i=1, 2, · · ·, k) to the input vector data V calculated by the vector selecting means 106, the data predicting means 108 calculates elements z(V, n+1) of the input vector data V, which is predicted time series data, by using the following equation which employs the weighting addition method with the similarities $R^i$ (i=1, 2, · · ·, k) taken as weighting addition factors:

$$z(V, n+1) = \sum_{i=1}^{K} U^{i_{n+1}} \cdot (R^i / \sum_{i=1}^{K} R^i) \qquad (1)$$

In this Equation (1),

(a) $R^i$ is the similarity between the inputted vector data V and the vector data $U^i$; and

(b) $U^i_{n+1}$ is the value of the (n+1)-th time series data of the vector data $U_i$.

For example, if sample values of the inputted current time series data are 0, 1, 2, 3, 4, 5, · · · and if the number of dimensions of the vector data V is 5, then the vector data $U^i$ to be generated by the vector generating means 101-1 are

$$U^0 = (0, 1, 2, 3, 4),$$

$$U^1 = (1, 2, 3, 4, 5),$$

$$U^2 = (2, 3, 4, 5, 6), \cdot\cdot\cdot\cdot\cdot\cdot\cdot\cdot\cdot$$

and therefore predicted time series data 109 are

$$U^0_{n+1} = 5,$$

$$U^1_{n+1} = 6,$$

$$U^2_{n+1} = 7, \cdot\cdot\cdot\cdot\cdot\cdot\cdot\cdot\cdot.$$

As described above, according to the first preferred embodiment of the present invention, the prediction of time series data is performed by using the similarities of a plurality of similar vector data of the past, by which the prediction precision can be enhanced. Also, because the amount of operations for calculating predictive data by using only vector data belonging to a set of similar vector data can be reduced so that the operating time can be reduced, time series data having higher precision can be predicted with a construction simpler than that of the prior art, by which a great effect for practical use is produced. Besides, it is enabled to design a desired time series signal predicting apparatus by taking into consideration the prediction precision and the operating time.

SECOND PREFERRED EMBODIMENT

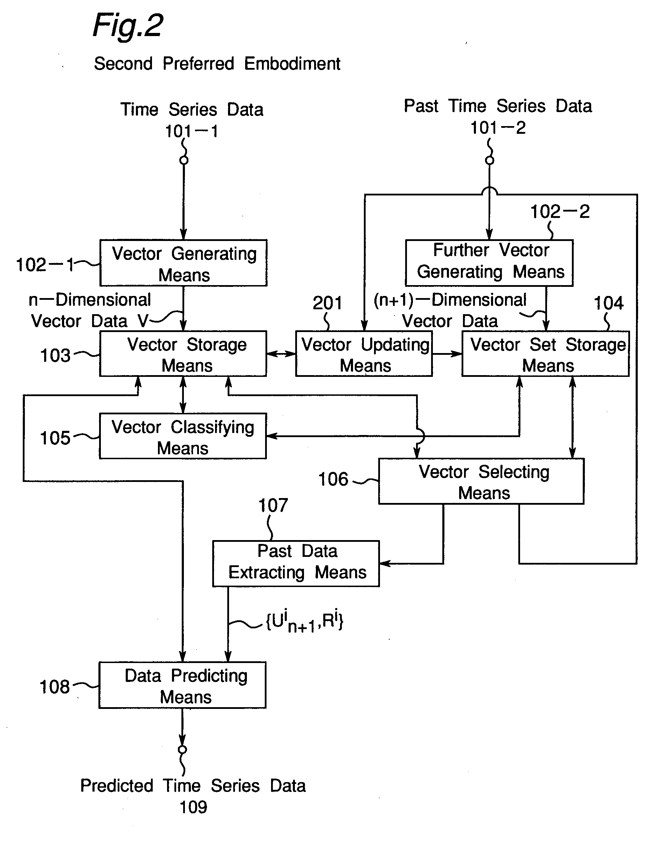

Fig. 2 is a block diagram showing the construction of a time series signal predicting apparatus which is a second preferred embodiment according to the present invention. Referring to Fig. 2, means that fulfill the same operations as those in Fig. 1 are designated by like reference numerals and their detailed description is omitted. The time series signal predicting apparatus of the second preferred embodiment differs from that of the first preferred embodiment of Fig. 1 in further comprising vector updating means 201. The vector updating means 201 updates the vector data having the lower similarities in the set to which vector data V generated from the inputted time series data 101-1 belong so as to replace them with the latest inputted vector data V.

The operation of the time series signal predicting apparatus of the second preferred embodiment constructed as described above will be explained below.

In this preferred embodiment, vector updating means 201 is additionally provided to perform the updating of the data vector set to be used for the prediction. The updating of data by the vector updating means 201 is implemented by replacing the vector data of the lowest similarities and the furthest past with input vector data of a vector set T to which the input vector data V belong. With the provision of such vector data updating means 201, the vector set stored in the vector set storage means 104 is updated to the latest time series data by updating the elements of each vector set, by which a prediction that incorporates changes in long-term tendency of time series data is enabled.

As in the first preferred embodiment, the vector selecting means 106 selects a plurality of k (n+1)-dimensional vector data having higher similarities to the input vector data V from the vector set T to which vector data V generated by the vector generating means 102-1 belong. Then, the plurality of k (n+1)-dimensional vector data selected by the vector selecting means 106 are inputted to the past data extracting means 107, and the past data extracting means 107 extracts, and outputs to the data predicting means 108, a plurality of k (n+1)-th time series data from the plurality of k inputted (n+1)-dimensional vector data. Further, based on the inputted current time series data 101-1, the plurality of k (n+1)-th time series data $U^i_{n+1}$ (i=1, 2, $\cdot\cdot\cdot$, k) inputted from the past data extracting means 107, the input vector data V stored in the vector storage means 103 and the similarities $R^i$ (i=1, 2, $\cdot\cdot\cdot$, k) representing the distances to the input vector data V calculated by vector selecting means 306, the data predicting means 108 calculates and outputs time series data 109 predicted by using the Equation (1). Meanwhile, each time the (n+1)-th time series data is newly inputted, the vector data updating means 201 compares the vector data belonging to the vector set selected at one preceding time by the vector selecting means 106 and stored in the vector set storage means 104, with the vector data to be updated, and replaces vector data of the lowest similarity with the latest input vector data.

As described above, according to this preferred embodiment, a prediction incorporating changes in long-term tendency of time series data is enabled by updating the elements of the set to which the inputted time series data 101-1 belong by using the latest input vector data. In the above preferred embodiment, the updating of data by the vector updating means 201 has been implemented by replacing inputted latest vector data with vector data of the lowest similarity in the vector set to which the latest vector data stored in the vector set storage means 103 belong. However, without being limited to this, the present invention allows the oldest or most past time series vector data to be replaced with inputted vector data of a set to which the inputted vector data belong. In this case also, a prediction incorporating changes in long-term tendency of time series data is enabled.

THIRD PREFERRED EMBODIMENT

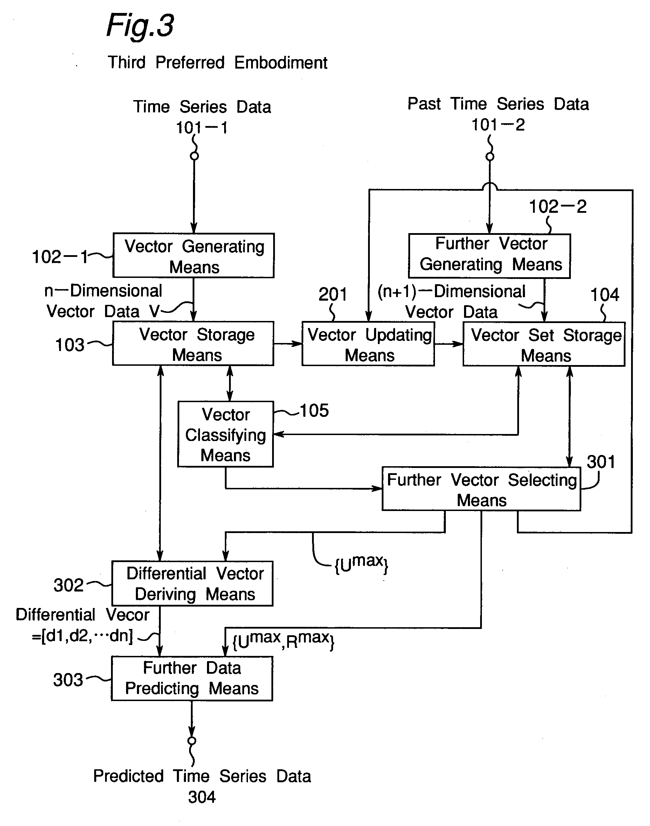

Fig. 3 is a block diagram showing the construction of a time series signal predicting apparatus which is a third preferred embodiment according to the present invention. Referring to Fig. 3, means that fulfill the same operations as those in Figs. 1 and 2 are designated by like reference numerals and their detailed description is omitted. The time series signal predicting apparatus of the third preferred embodiment differs from that of the second preferred embodiment of Fig. 2 in comprising the following means instead of the vector selecting means 106, the past data extracting means 107 and the data predicting means 108:

(a) further vector selecting means 301 for outputting vector data $U^{max}$ having the highest similarities to the n-dimensional input vector data V of newly inputted time series data, as well as its similarity $R^{max}$, from a vector set belonging to a vector set T to which the vectors stored in the vector storage means 103 have been decided to belong;

(b) differential vector deriving means 302 for calculating n-dimensional differential vectors $[d_1, d_2, \cdots, d_n]$ between vector data V read from the vector storage means 103 and the vector $U^{max}$ outputted from the further vector selecting means 301; and

(c) further data predicting means 303 for predicting and outputting time series data corresponding to the (n+1)-th-dimension of inputted vector data V, based on the n-dimensional differential vectors $[d_1, d_2, \cdots, d_n]$ calculated by the differential vector deriving means 302 and vectors representing the similarity $R^{max}$ outputted from the further vector selecting means 301.

The operation of the time series signal predicting apparatus of the third preferred embodiment constructed as described above will be explained below. Referring to Fig. 3, inputted time series data 101-1 is inputted to the vector generating means 102-1, and the vector generating means 102-1 converts the inputted time series data 101-1 into n-dimensional vector data $V = [v_1, v_2, \cdots, v_n]$, storing them into the vector storage means 103. Subsequently, the vector classifying means 105 decides which set the input vector data V belong to, out of vector sets $P_i$ (i=1, 2, $\cdots$, L) that have been previously prepared and stored in the vector set storage means 104. This classification is performed by using the (n+1)-dimensional vector data generated by the further vector generating means 102-2 based on the past time series data 101-2. The (n+1)-dimensional vectors generated by the further vector generating means 102-2 are classified into L sets $P_i$ by using up to their n-dimensional vector elements. Typical vector data $Q_i$ (i=1, 2, $\cdots$, L) for classification are generated by the further vector generating means 102-2 prior to the prediction and then stored in the vector set storage means 104. For the generation process of these typical vector data $Q_i$, various clustering methods may be used such as the known LBG algorithm disclosed in the Prior Art Reference 1, pp. 114-115.

The vector data V newly generated by the vector generating means 102-1 are compared with the typical vectors $Q_i$ in each set $P_i$ created in the above way, and classified into a vector set $P_s$ to which typical vectors having the highest similarities $R_i$ belong. The further vector selecting means 301 selects vector data $U^{max}$ of the highest similarities to the input vector data V from the vector set $P_s$ to which the inputted vector data V belong, and outputs them to the differential vector deriving means 302 and the further data predicting means 303, while the further vector selecting means 301 calculates a similarity $R^{max}$ between the input vector data V and the vector data $U^{max}$ and outputs it to the further data predicting means 303. It is noted that the aforementioned Euclidean distance is used as the scale of similarity. That is, the further vector selecting means 301 calculates Euclidean distances $LEN^{sj}$ between the input vector data V and the vector data $U^{sj}$ belonging to the set $P_s$ as shown in the following equation, and outputs a vector $U^{sj}$ having the smallest distance as $U^{max}$:

$$LEN^{sj} = \|V - U^{sj}\| \qquad (2)$$

The differential vector deriving means 302 calculates differential vectors $d = U^{max'} - V = [d_1, d_2, \cdots, d_n]$ between n-dimensional vectors $U^{max'}$, which result from excluding the (n+1)-th-dimensional elements from the selected vector data $U^{max}$, and the inputted vectors V. The (n+1)-th-dimensional data $U_{n+1}$ selected by the further vector selecting means 301, the similarity $R^{max}$ between the input vector data V and the vector data $U^{max}$, and the differential vectors d calculated by the differential vector deriving means 306 are inputted to the further data predicting means 303, and the further data predicting means 303 predicts and outputs time series data 304 corresponding to the (n+1)-th dimension of the inputted vector data V. The vector updating means 201 updates the vector set stored in the vector set storage means 104 as in the second preferred embodiment.

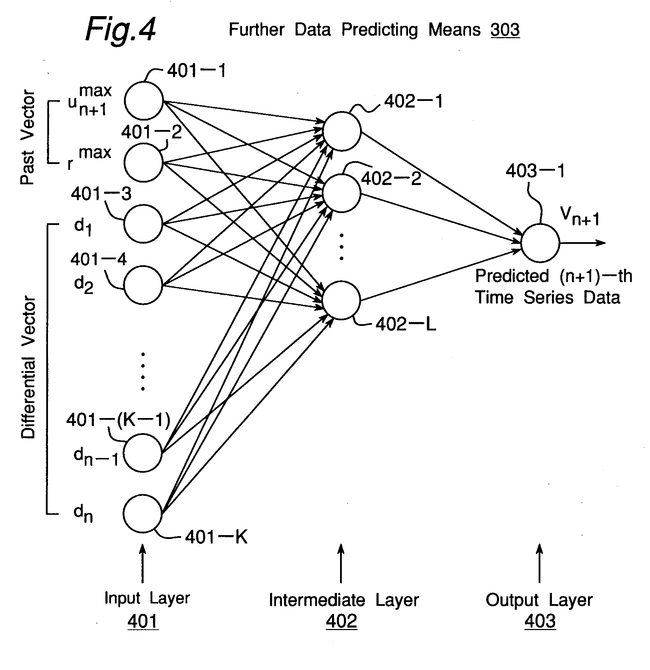

Fig. 4 is an arrangement diagram of a feed forward type neural network constituting further data predicting means 303 of Fig. 3. This neural network comprises:

(a) an input layer 401 composed of a plurality of K units 401-1 to 401-K;

(b) an intermediate layer 402 composed of a plurality of L units 402-1 to 402-L; and

(c) an output layer 403 composed of one unit 403-1,

wherein each of the units 401-1 to 401-K of the input layer 401 is connected to each of the units 402-1 to 402-L of the intermediate layer 402, and each of the units 402-1 to 402-L of the intermediate layer 402 is connected to the unit 403-1 of the output layer 403. Each of the data outputted from each of the units 401-1 to 401-K of the input layer 401 is multiplied by a specified weighting factor and then outputted to each of the units 402-1 to 402-L of the intermediate layer 402, and each of the data outputted from the units 402-1 to 402-L of the intermediate layer 402 is multiplied by a specified weighting factor and then outputted to the unit 403-1 of the output layer 403. Then, the weighting factors for each of the above connection lines is trained as will be described in detail later.

The prediction of time series data by the further data predicting means 303 is executed after the neural network shown in Fig. 4 is trained by a known training method. For the training of the neural network, the method as shown in the Prior Art Reference 1, pp. 39-55, may be used as an example. In this neural network, the $(n+1)$-th-dimensional element $U^{max}_{n+1}$ of the selected vector data $U^{max}$ outputted from the further vector selecting means 301, differential vectors $d = [d_1, d_2, \cdots, d_n]$ calculated by the differential vector deriving means 302 and the element $r^{max}$ of the similarity $R^{max}$ between the input vector data V and the vector data $U^{max}$ are inputted to each of the units 401-1 to 401-K of the input layer 401 as shown in Fig. 4, by which predicted time series data corresponding to the $(n+1)$-th dimension of n-dimensional input vectors V is outputted from the unit 403-1 of the output layer 403 and thus predicted.

The neural network shown in Fig. 4 executes the prediction process after previously training by a known training method with known input data $(d, R^{max}, U^{max})$ obtained from the past time series data 101-2 and output data $V_{n+1}$. Using a neural network of such arrangement makes it possible to predict a time series signal by taking advantage of non-linear training ability, which is a feature of neural networks.

Although the neural network of Fig. 4 is provided with the intermediate layer 402 of one layer, the present invention is not limited to this and the neural network may be provided with an intermediate layer 402 composed of a plurality of layers.

In this preferred embodiment, the further data predicting means 303 is implemented by the neural network of Fig. 4. However, the present invention not being limited to this, it is also possible to predict an element $V_{n+1}$ corresponding to the $(n+1)$-th dimension of input vector data V by predicting the $(n+1)$-th-dimensional time series data $d_{n+1}$ of a differential vector d from individual components $d_1, d_2, \cdots, d_n$ constituting the differential vector d and by adding up a known $U^{max}_{n+1}$ and the predicted differential vector $d_{n+1}$ together, by using a known linear prediction method disclosed in Prior Art Reference 2, "A Theory of Modern Digital Signal Processing and its Applications," supervised for translation by Aoyama, published by Maruzen, December 1992, instead of the neural network.

This preferred embodiment has employed a method that one vector data having the maximum similarity to input vector data V is selected from a vector set $P_s$ by the further vector selecting means 301. However, without being limited to this, the present invention allows the use of a method that a plurality of m vector data having the higher similarities are selected. In this case, differential vectors d inputted to the neural network of Fig. 4, $(n+1)$-th-dimensional time series data $V_{n+1}$ of selected past vector data and its similarity R to the vectors are provided to a plurality of m in number.

As described above, according to the time series signal predicting apparatus which is the third preferred embodiment according to the present invention, it becomes possible to predict time series data of high non-linearity by taking advantage of non-linear training ability, which is a feature of neural networks.

FOURTH PREFERRED EMBODIMENT

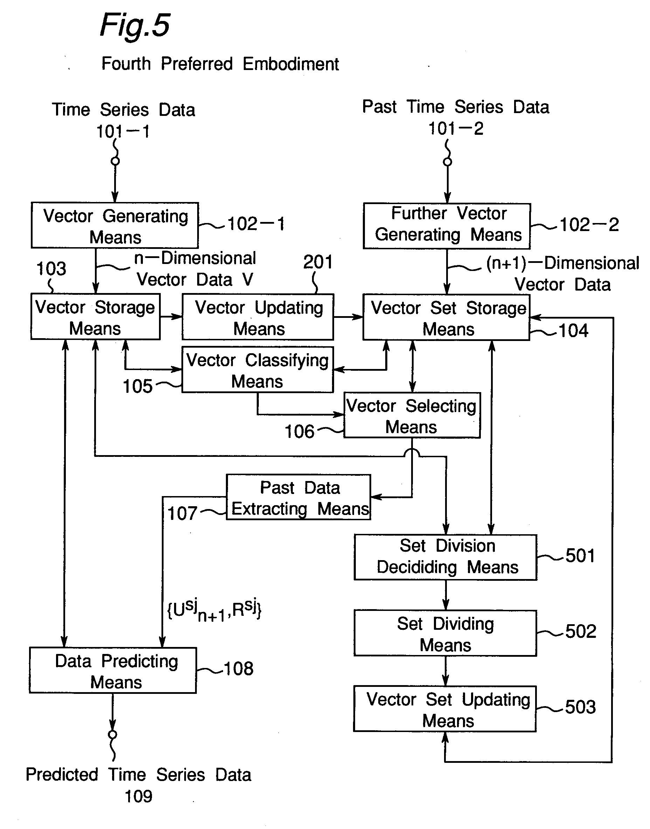

Fig. 5 is a block diagram showing the construction of a time series signal predicting apparatus which is a fourth preferred embodiment according to the present invention. Referring to Fig. 5, means that fulfill the same operations as those in Figs. 1 and 2 are designated by like reference numerals and their detailed description is omitted. The time series signal predicting apparatus of the fourth preferred embodiment differs from that of the second preferred embodiment of Fig. 2 in further comprising the following means:

(a) set division deciding means 501 for, based on a distribution of similarities between vector data $U^{sj}$ within a vector set selected by the vector selecting means 106 and input vector data V, deciding whether or not the vector set is to be divided;

(b) set dividing means 502 for, when it has been decided by the set division deciding means 501 that the vector set to which the inputted vector data V belong is to be divided, dividing the vector set into a plurality of vector sets; and

(c) vector set updating means 503 for updating vector sets stored in the vector storage means 104 in such a way that the vector sets are replaced with the vector sets resulting from the division by the set dividing means 502.

The operation of the time series signal predicting apparatus of the fourth preferred embodiment constructed as described above will be explained below. Referring to Fig. 5, the inputted time series data 101-1 are converted by the vector generating means 102-1 into n-dimensional vector data $V = (v_1, v_2, \cdots, v_n)$, and then stored in the vector storage means 103. Subsequently, the vector classifying means 105 decides which one of vector data sets $P_i$ (i=1, 2, $\cdots$, L) previously prepared and stored in the vector set storage means 104 the input vector data V belong to. Then, the vector classifying means 105 operates in the same way as in the first preferred embodiment. The vector selecting means 106 selects a plurality of m vector data $U^{sj}$ having the higher similarities to the input vector data V, from the vector set $P_s$ to which the n-dimensional input vector data V inputted and stored in the vector storage means 103 belong. In this case, Euclidean distance as shown in the foregoing Equation (2) is applied as the scale for the similarity. Subsequently, the past data extracting means 107 selects the (n+1)-th-dimensional time series data $U^{sj}_{n+1}$ [$U^{sj}_{n+1}$] (j=1, 2, $\cdots$, m) out of the plurality of m (n+1)-dimensional vector data $U^{sj}$ (j=1, 2, $\cdots$, m) selected by the vector selecting means 106, outputting the time series data together with their similarities $R^{sj} = [r^{sj}]$ (j=1, 2, $\cdots$, m) to the data predicting means 108. Based on the (n+1)-th-dimensional time series data $U^{sj}_{n+1}$ of the plurality of m past vectors obtained by the past data extracting means 107, the data predicting means 108 predicts and outputs the (n+1)-th-dimensional time series data $109V_{n+1}$ of the n-dimensional input vectors V by using the following equation:

$$V_{n+1} = \sum_{j=1}^{m} [(u^{sj}_{n+1} \cdot r^{sj}) / \sum_{j=1}^{m} r^{sj}] \qquad (3)$$

This Equation (3) represents that the (n+1)-th-dimensional time series data $U^{sj}_{n+1}$ (j=1, 2, $\cdots$, m) of each of the plurality of m selected vectors $U^{sj}$ is subjected to a weighting addition operation by using the similarities $R^{sj}$ between vectors $U^{sj}$ and input vector data V.

The set division deciding means 501 first calculates a standard deviation $\sigma$ of the similarities R to the input vector data V determined in selecting the plurality of m vector data by the vector selecting means 106. Then, by comparing this standard deviation $\sigma$ with a previously given permissible standard deviation $\sigma_{th}$, if $\sigma$ is greater than $\sigma_{th}$, then the set division deciding means 501 decides to divide the selected vector set $P_s$ into two. Based on the decision by the set division deciding means 501, the set dividing means 502 divides the vector set $P_s$ selected by the vector classifying means 105 into such two vector sets $P_{s1}$ and $P_{s2}$ that their standard deviations $\sigma$ become generally equal to each other. As the method for this division, a classification by the LBG algorithm is used as an example, as in the operation of the vector classifying means 105. The vector sets $P_{s1}$, $P_{s2}$ obtained by the division in this way are inputted to the vector set updating means 503, and the vector set updating means 503, while receiving the input of next time series data, updates the vector set inputted and stored in the vector set storage means 104 in such a way that the vector set $P_s$ is divided into two vector sets $P_{s1}$, $P_{s2}$.

As described above, according to this preferred embodiment, a set composed of past vector data is updated so as to be divided in accordance with the distribution of similarities to inputted vectors and thereby subdivided. Thus, it becomes possible to make a prediction incorporating more tendency of changes in time series data, and to achieve improvement in the prediction precision as well.

## FIFTH PREFERRED EMBODIMENT

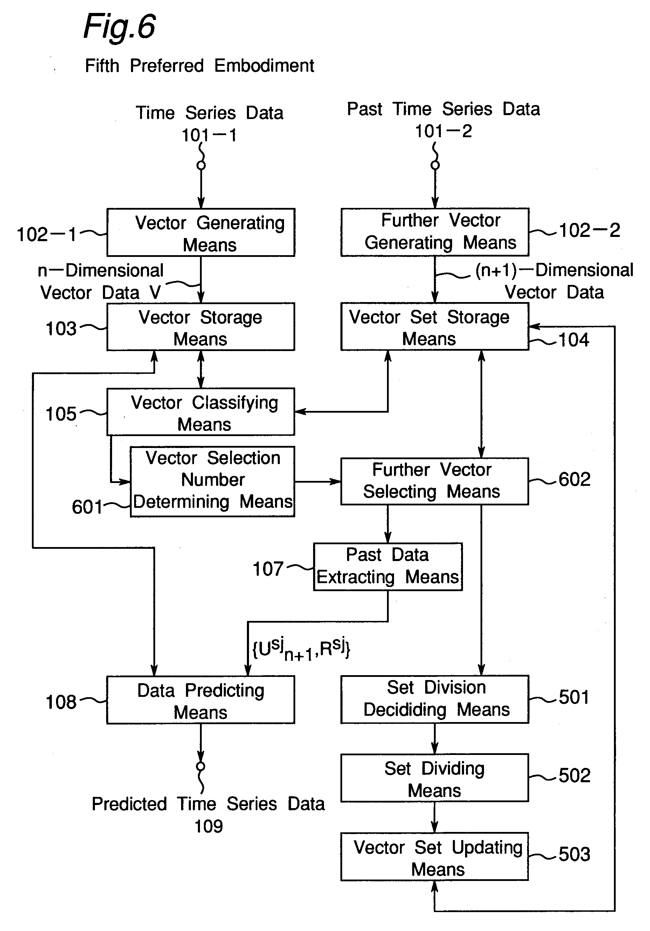

Fig. 6 is a block diagram showing the construction of a time series signal predicting apparatus which is a fifth preferred embodiment according to the present invention. Referring to Fig. 6, means that fulfill the same operations as those in Figs. 1 to 5 are designated by like reference numerals and their detailed description is omitted. The time series signal predicting apparatus of the fifth preferred embodiment differs from that of the fourth preferred embodiment of Fig. 5 in comprising:

(a) no vector updating means 201;
(b) vector selection number determining means 601 for calculating similarities $R^{ci}$ between typical vector data, which typify vector sets $P_i$ (i=1, 2, $\cdots$, L) stored in the vector set storage means 104, and latest vector data stored in the vector storage means 103, and determining a vector selection number $NUM^i$, which is the number of vectors to be selected from each of the vector sets $P_i$, according to the similarities $R^{ci}$; and
(c) further vector selecting means 602, instead of the vector selecting means 106, for selecting the vector selection number $NUM^i$ of vector data according to the similarities $R^{ci}$ from each of the vector sets $P_i$ stored in the vector set storage means 104 based on the vector selection number $NUM^i$ determined by the vector selection number determining means 601.

The operation of the time series signal predicting apparatus of the fifth preferred embodiment according to the present invention will be explained below. This preferred embodiment is characterized in that the prediction is performed by selecting a plurality of vector data from all the vector sets stored in the vector set storage means 104 according to the similarities $R^{ci}$ to the latest vector data V inputted and stored in the vector storage means 103.

The vector selection number determining means 601 calculates the similarities $R^{ci}$ between typical vector data $U^{ci}$, which typify the individual vector sets $P_i$ (i=1, 2, $\cdots$, L), and inputted time series data V, and determines the vector selection number $NUM^i$ for vectors to be selected from each of the vector sets based on the similarities $R^{ci}$. In this process, the vector selection number determining means 601 performs a sorting of vector data in descending order of the similarities $R^{ci}$ between the typical vector data $U^{ci}$ and the inputted time series data V, and sets the vector selection number $NUM^i$ so that the higher the similarities $R^{ci}$ are, the more the vector data are selected. As the vectors $U^{ci}$ that typify the vector sets $P_i$, typical vectors $U^{ci}$ created by the vector classifying means 105 by using a known LBG algorithm are used. In a preferred embodiment, as the method for setting the vector selection number $NUM^i$ for vectors to be selected, a method of linearly changing the vector selection number $NUM^i$ as shown in the following equation is used:

$$NUM^i = (m \cdot r^{ci})/(\sum_{i=1}^{L} r^{ci}) \qquad (4)$$

It is noted that the vector selection number is selected so as to result in a plurality of m vectors in total. The vector selecting means 602 performs the process of actually selecting the vector selection number $NUM^i$ of vector data $U^i$ having higher similarities from each of the vector sets $P_i$ based on the vector selection number $NUM^i$ determined by the vector selection number determining means 601, and thereafter outputs the vector data of the selected vector sets $P_i$ to the past data extracting means 107 and the set division deciding means 501. Then, the past data extracting means 107 extracts the (n+1)-th-dimensional time series data of the plurality of m (n+1)-dimensional vector data selected by the further vector selecting means 602, and then outputs them together with their similarities to the data predicting means 108. The data predicting means 109 predicts (n+1)-th-dimensional time series data of the inputted n-dimensional vectors based on the plurality of m (n+1)-th-dimensional time series data extracted by the past data extracting means 107 and the similarities calculated above.

As described above, according to this preferred embodiment, the prediction of time series data 101 is performed based on the similarities $R^{ci}$ to a plurality of m vector data selected from a plurality of vector sets. Thus, it becomes possible to predict time series having more complex tendencies which could not be predicted by transition patterns of time series data belonging to the vector sets. This allows improvement in the prediction precision of time series signals including large amounts of variations.

SIXTH PREFERRED EMBODIMENT

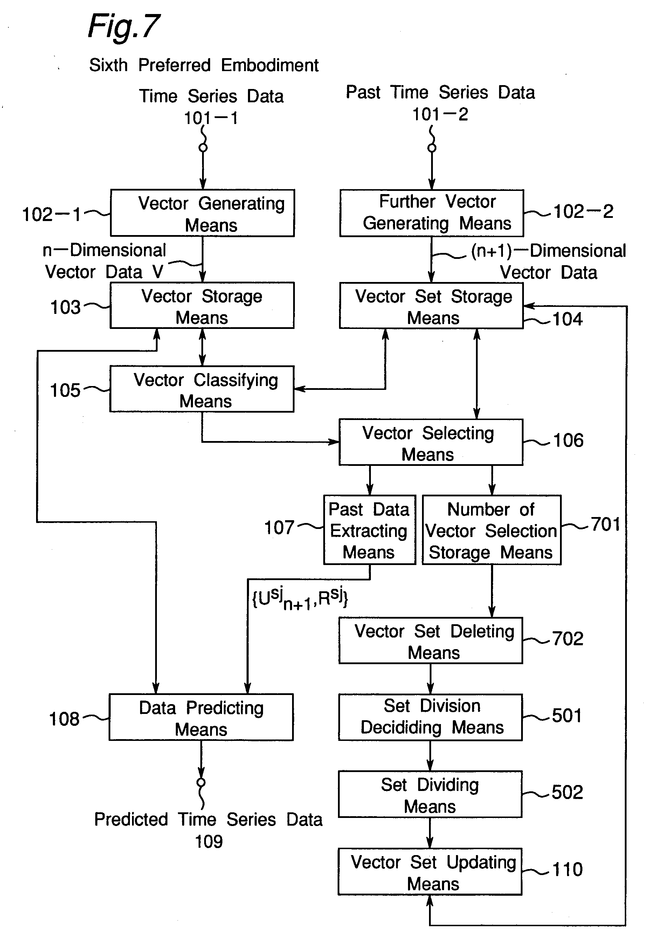

Fig. 7 is a block diagram showing the construction of a time series signal predicting apparatus which is a sixth preferred embodiment according to the present invention. Referring to Fig. 7, means that fulfill the same operations as those in Figs. 1 to 6 are designated by like reference numerals and their detailed description is omitted. The time series signal predicting apparatus of the sixth preferred embodiment differs from that of the fourth preferred embodiment of Fig. 5 in further comprising:

(a) no vector selection number determining means 601; and
(b) number of vector-selections storage means 701 and vector set deleting means 702 between the vector selecting means 106 and the set division deciding means 501.

The number of vector-selections storage means 701 stores the number of selections $T_s$ at the time when the vector set $P_s$ to which input vector data V belong is selected by the vector selecting means 106. If the number of selections $T_s$ stored in the number of selections storage means 701 is smaller than a preset permissible number of selections $T_{th}$, then the vector set deleting means 702 deletes the vector set. After that, the vector sets stored in the vector set storage means 104 are updated by vector set updating means 110. With the arrangement as described above, vector sets which have scarcely been used in latest prediction processes are deleted, so that the number of vector sets to be stored in the vector set storage means 104 can be prevented from increasing and that the construction of the time series signal predicting apparatus can be simplified.

In the sixth preferred embodiment, the vector set deleting means 702 has been designed to delete vector sets the number of selections for which is smaller than the permissible number of selections $T_{th}$ by comparing the number of selections $T_s$ for each of the vector sets stored in the number of vector-selections storage means 701 with the permissible number of selections $T_{th}$ each time a previously specified number of new time series data 101 have been inputted.

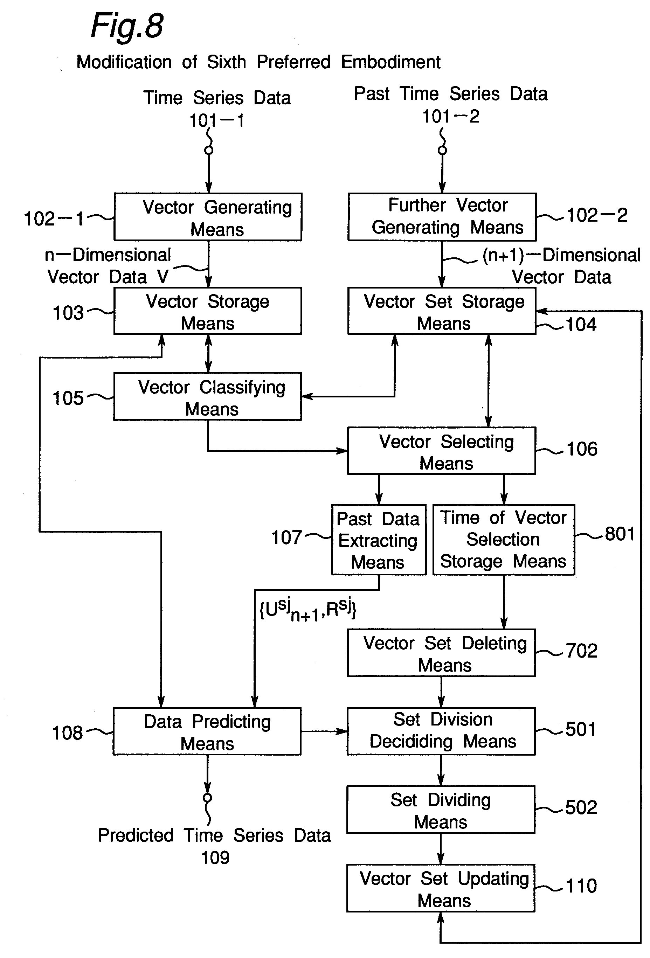

However, without being limited to this, the present invention allows such an arrangement as shown in the modification of the sixth preferred embodiment shown in Fig. 8.

Referring to Fig. 8, the time series signal predicting apparatus comprises time of vector-selection storage means 801 instead of the number of vector-selections storage means 701 of Fig. 7. The time of vector-selection storage means 801 stores the latest time s at which each vector set was selected, where if the time of selection is older than a permissible time set by referencing the current time, then the set deleting means 702 deletes the vector set relevant to the time of selection. After that, the vector sets stored in the vector set storage means 104 are updated by the vector set updating means 110. That is, by comparing the time of selection $T_s$ for each of the vector sets stored in the time of vector-selection storage means 801 with the permissible time of selection $T_{th}$ every preset update time intervals, vector sets that have been selected only earlier than the permissible time $T_{th}$ are deleted from the vector set storage means 104. With the arrangement as described above, vector sets which have scarcely been used in latest predicting processes are deleted, so that the number of vector sets to be stored in the vector set storage means 104 can be prevented from increasing, and that the construction of the time series signal predicting apparatus can be simplified.

SEVENTH PREFERRED EMBODIMENT

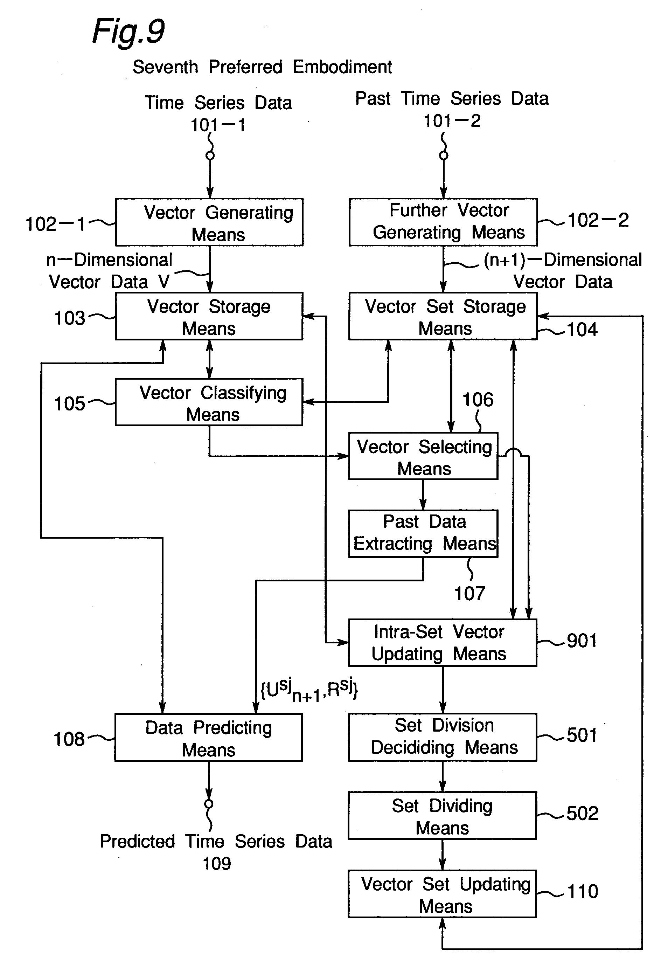

Fig. 9 is a block diagram showing the construction of a time series signal predicting apparatus which is a seventh preferred embodiment according to the present invention. Referring to Fig. 9, means that fulfill the same operations as those in Figs. 1 to 8 are designated by like reference numerals and their detailed description is omitted. The time series signal predicting apparatus of the seventh preferred embodiment differs from that of the sixth preferred embodiment of Fig. 7 in comprising intraset vector updating means 901 instead of the number of vector-selections storage means 701. In this case, targeting the vector set $P_s$ to which it has been determined by the vector classifying means 105 the input vector data V belong, the intra-set vector updating means 901, when the vector selecting means 106 selects a plurality of m vectors $U^{sj}$ (j=1, 2, $\cdots$, m) based on similarities, makes an update with the input time of the next time series data in such a way that the vector $U^{min}$ of the lowest similarity stored in the vector set storage means 104 is replaced with newly inputted vector data V. That is, the vector $U^{min}$ of the lowest similarity is deleted, while newly inputted vector data V is added.

With the arrangement as described above, input vector data is newly added to the vector set within the vector set storage means 104 by the intra-vector-set data updating means 109, while the oldest vector data is deleted. This allows the number of vectors to be stored in the vector set storage means 104 to be kept constant, so that the construction of the time series signal predicting apparatus can be simplified. Furthermore, since the vector set in the vector set storage means 104 can be updated to new vector data, there can be produced a unique effect that vector sets matching new tendencies of time series data can be formed.

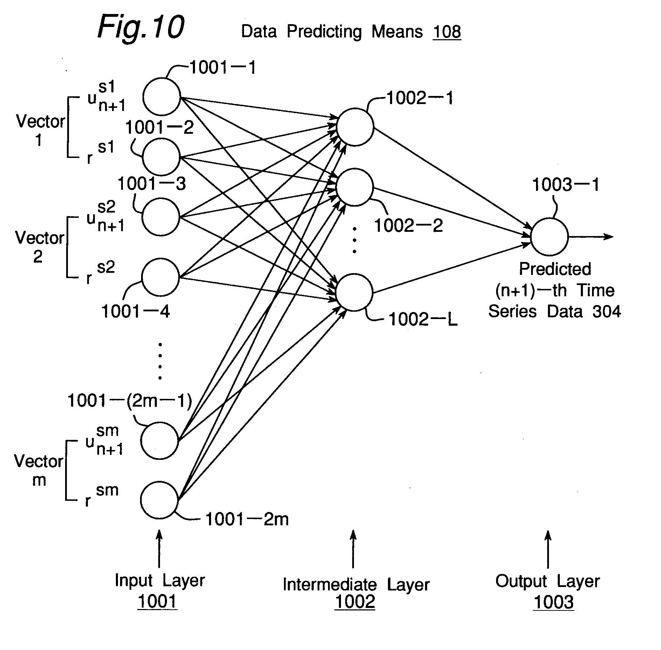

Fig. 10 is an arrangement diagram of a neural network constituting the data predicting means 108 in Fig. 1, Fig. 2 and Figs. 5 through 9. The data predicting means 108 to be used in the time series signal predicting apparatus in the first, second and fourth through seventh embodiments according to the present invention can be implemented by the neural network of Fig. 10. This neural network comprises:

(a) an input layer 1001 comprising a plurality of 2m units 1001-1 to 1001-2m;
(b) an intermediate layer 1002 comprising a plurality of L units 1002-1 to 1002-L; and
(c) an output layer 1003 comprising one unit 1003-1,

wherein each of the units 1001-1 to 1001-2m of the input layer 1001 is connected to each of the units 1002-1 to 1002-L of the intermediate layer 1002, and each of the units 1002-1 to 1002-L of the intermediate layer 1002 is connected to the unit 1003-1 of the output layer 1003. In this arrangement, data outputted from each of the units 1001-1 to 1001-2m of the input layer 1001 is multiplied by its specified weighting factor and then outputted to each of the units 1002-1 to 1002-L of the intermediate layer 1002. Data outputted from each of the units 1002-1 to 1002-L of the intermediate layer 1002 is multiplied by its specified weighting factor and then outputted to the unit 1003-1 of the output layer 1003. The weighting factor for each connection line is trained in the following way.

The neural network is trained in such a manner that, from the inputs of (n+1)-th-dimensional time series data $U^{sj}_{n+1} = [U^{sj}_{n+1}]$ (j=1, 2, $\cdots$, m) of a plurality of m (n+1)-dimensional vectors obtained by the past data extracting means 107, and similarities $R^{sj}$ (j=1, 2, $\cdots$, m) between the plurality of m vectors and input vectors, a predictive value of time series data $V_{n+1}$ corresponding to the (n+1)-th-dimension of the n-dimensional input vectors V is outputted.

In the preferred embodiment of Fig. 10, the data predicting means 108 of Fig. 1, Fig. 2 and Figs. 5 through 9 is implemented by a neural network. Otherwise, time series data $V_{n+1}$ may be predicted by using a known linear prediction method.

Although the neural network of Fig. 10 is provided with the intermediate layer 1002 of one layer, the present invention is not limited to this, and may be provided with an intermediate layer 1002 of at least one layer.

EIGHTH PREFERRED EMBODIMENT

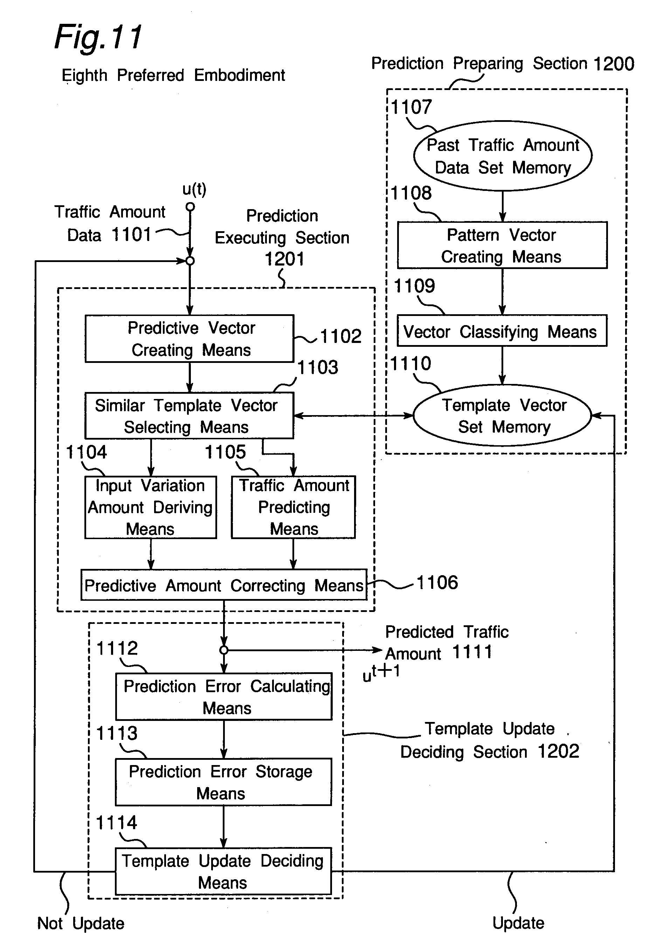

Fig. 11 is a block diagram showing the construction of a time series signal predicting apparatus which is an eighth preferred embodiment according to the present invention. This preferred embodiment is an embodiment in which a time series signal predicting apparatus according to the present invention is applied to the process of predicting tunnel-inflow traffic amounts in superhighways.

Referring to Fig. 11, the time series signal predicting apparatus of this preferred embodiment can be divided roughly into a prediction preparing section 1200, a prediction executing section 1201 and a template update deciding section 1202.

In this arrangement, the prediction executing section 1201 comprises:

(a) predictive vector creating means 1102 for creating a plurality m-dimensional predictive vector U by adding traffic amount data u(t-m+1), u(t-m+2), $\cdots$, u(t-2), u(t-1) of past (m-1) time points to traffic amount data 1101u(t) of the current time t;

(b) similar template vector selecting means 1103 for selecting (m+1)-dimensional template vectors $t_i$ (i=1, 2, $\cdots$, K) having the highest similarities to the predictive vector U by using template vector sets within a previously prepared and generated template vector set memory 1110;

(c) input variation amount deriving means 1104 for calculating differential vectors $d_i$ of up to m-th elements between the similar template vectors $t_i$ selected by the similar template vector selecting means 1103 and the predictive vector U, and further calculating variation reference amounts $x_i$ from the differential vectors $d_i$ and outputting the results;

(d) traffic amount predicting means 1105 for making a prediction by extracting (m+1) elements $t_i(m+1)$ of a plurality of k (m+1)-dimensional vectors selected by the similar template vector selecting means 1103; and

(e) predictive amount correcting means 1106 for calculating and outputting a final predicted traffic amount 1111$u^{t+1}$ of the traffic amount at time (t+1) by correcting the plurality of k traffic amount data $t_i(m+1)$ extracted by the traffic amount predicting means 1105 based on the variation reference values $x_i$ calculated from the differential vectors $d_i$ between the predictive vector U calculated by the input variation amount deriving means 1104 and the similar template vectors $t_i$ that are selected vectors.

Also, the prediction preparing section 1200 comprises:

(f) pattern vector creating means 1108 for creating (m+1)-dimensional pattern vectors $V_j$ (j=1, 2, $\cdots$, $p_{num}$) representing variation patterns in time-elapsing order from a traffic amount data set GP ranging over the past few days or few months previously stored in a past traffic amount data set memory 1107;

(g) vector classifying means 1109 for dividing the past pattern vectors $V_j$ (j=1, 2, $\cdots$, $p_{num}$) created by the pattern vector creating means 1108 into a plurality of subsets $GP_s$ (s=1, 2, $\cdots$, $s_{num}$) and storing them into the template vector set memory 1110; and

(h) template vector set memory 1110 for storing a template vector set composed of vectors $T_s$ (s=1, 2, $\cdots$, $s_{num}$) typifying the subsets $GP_s$ (s=1, 2, $\cdots$, $s_{num}$) classified by the vector classifying means 1109.

Further, the template update deciding section 1202 comprises:

(i) prediction error calculating means 1112 for calculating an error $e(t+1)=|u(t+1)-u^{t+1}|$ between the traffic amount u(t+1) at the actual time (t+1) and the predicted traffic amount $u^{t+1}$;

(j) prediction error storage means 1113 for storing prediction errors e(t+1) calculated by the prediction error calculating means 1112, the prediction errors e(t+1) being of a specified number of time points; and

(k) template update deciding means 1114 for deciding whether to update the template vector set memory 1110 based on circumstances of changes in past prediction errors e(t+1) stored in the prediction error storage means 1113.

The operation of the time series signal predicting apparatus for tunnel-inflow traffic amount prediction constructed as described above will be explained below.

Referring first to the prediction preparing section 1200, in order to preparatorily create a template vector set, a set GP of past tunnel-inflow traffic amounts is prepared in the past traffic amount data set memory 1107. Then, the pattern vector creating means 1108 creates past traffic amount pattern vectors $V_j$ with vector elements overlapped, so that the shift amount l of the head element number of pattern vectors to be created will have such a relationship to the number of dimensions (m+1) of the pattern vectors to be created that (m+1) > l. This makes it possible to capture the features of variation patterns in the past traffic amount as correctly as possible.

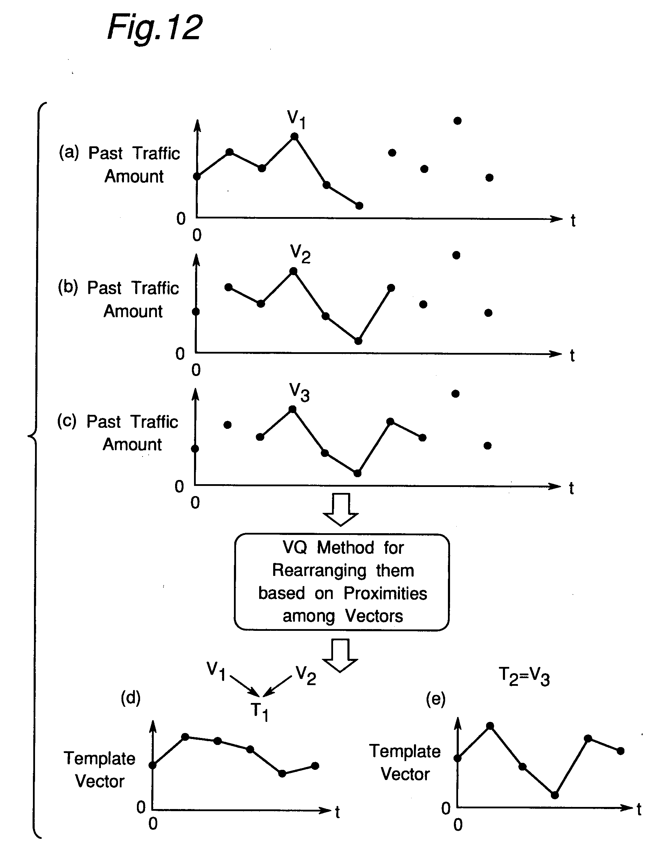

Fig. 12 is a view showing an operation example of the time series signal predicting apparatus of Fig. 11, where Figs. 12 (a), 12 (b), 12 (c) are graphs showing vectors $V_1$, $V_2$, $V_3$ of past traffic amounts versus time, and Figs. 12 (d), 12 (e) are graphs showing template vectors resulting from rearranging the vectors $V_1$, $V_2$, $V_3$. Fig. 12 illustrates an example in which 6-dimensional pattern vectors $V_1$, $V_2$, $V_3$ are created while time is shifted in units of one time point.

Referring to Fig. 12, the vector classifying means 1109 classifies the pattern vectors $V_j$ ($j$=1, 2, $\cdots$, $p_{num}$) created by the pattern vector creating means 1108 into a plurality of $s_{num}$ subsets $GP_s$ and creates vectors $T_s$ typifying the individual subsets $GP_s$. For this classification of sets, various clustering methods are available such as the known VQ (Vector Quantization) method, the LVQ (Learning Vector Quantization) method and the like. In this case, the VQ method is used as shown in Fig. 12.

A template vector set GT stored in the template vector set memory 1110 and used to perform pattern matching with the predictive vector U is composed of vectors $T_s$ ($s$=1, 2, $\cdots$, $s_{num}$) typifying the individual subsets $GP_s$ created by the vector classifying means 1109. Meanwhile, in the prediction executing section 1201, traffic amount data u(t) at the current time t is first inputted to the predictive vector creating means 1102, and the predictive vector creating means 1102 arrays the traffic amount data u(t), traffic amount data u(t-m+1), u(t-m+2), $\cdots$, u(t-1) at past (m-1) time points, thereby creating a m-dimensional predictive vector U = [u(t-m+1) , u(t-m+2), $\cdots$, u(t-1), u(t)] and outputting it to the similar template vector selecting means 1103. Subsequently, the similar template vector selecting means 1103 selects K template vectors having higher similarities to the predictive vector U, where the selected K template vectors are designated as $t_i$ ($i$=1, 2, $\cdots$, K). As the scale $Sv_s$ of similarity between any given template vector $T_s$ ($s$=1, 2, $\cdots$, $s_{num}$) and the predictive vector U, a sum of square errors of up to m-th elements is used as shown in the following equation:

$$Sv_s = \sum_{j=1}^{m} (U(j) - T_s(j)) \times (U(j) - T_s(j)), \tag{5}$$

where U(j) represents the j-th element of the predictive vector U, and $T_s$(j) represents the j-th element of the template vector $T_s$. Other than the above Equation (5), it is also possible to use angles formed by the predictive vector U of up to m-th elements and the template vectors $T_s$.

Next, the input variation amount deriving means 1104 calculates differential vectors $d_i$ of up to m-th elements based on the selected K template vectors $t_i$ ($i$=1, 2, $\cdots$, K) and the predictive vector U, outputting them to the predictive amount correcting means 1106. Whereas the variation reference amount $x_i$ is calculated from these differential vectors $d_i$, the vector norm of the differential vectors $d_i$ is here regarded as $x_i$. Meanwhile, the traffic amount predicting means 1105 extracts the (m+1)-th elements $t_i$(m+1) ($i$=1, 2, $\cdots$, K) of the selected K template vectors, and then outputs them to the predictive amount correcting means 1106. The values of the (m+1)-th elements $t_i$(m+1) ($i$=1, 2, $\cdots$, K) of the extracted K template vectors become candidates for a predicted traffic amount 1111 predicted from the template vectors generated from the past traffic amount data pattern.

However, the past traffic amount data pattern actually could not afford to capture all the traffic amount patterns, so that there exist prediction errors between the predictive vector U of up to m-th elements and the template vectors $t_i$ ($i$=1, 2, $\cdots$, K). Therefore, the predictive amount correcting means 1106 calculates a predicted traffic amount $u^{t+1}$ of the final time (t+1) by using the K candidates $t_i$(m+1) ($i$=1, 2, $\cdots$, k) for the predicted traffic amount 1111 extracted by the predictive amount correcting means 1105 and the variation reference amounts $x_i$ obtained from the differential vectors $d_i$ between the template vectors and the predictive vector U. As the method for this correction, a method using fuzzy rules represented by the following equation is used:

$$IF\ U(m) = u(t) \doteqdot t_i(m) \tag{6}$$

$$THEN\ U(m+1) = u(t+1) \doteqdot t_i(m+1),$$

$$(i = 1, 2, \cdots, K)$$

The fuzzy membership function to be used here is such a trigonometric function that the reliability of a location shown by each selected vector $t_i$ on an axis represented by the variation reference amounts $x_i$ with respect to the relevant selected vector becomes 1.0. In this case, with the maximum value $x_{max}$ among the variation reference amounts $x_i$ ($i$=1, 2, $\cdots$, K), the possible range of $x_i$ is defined as $-x_{max} \leq x_i \leq x_{max}$, so that those places where the reliability of the selected vector becomes 1.0 are all contained.

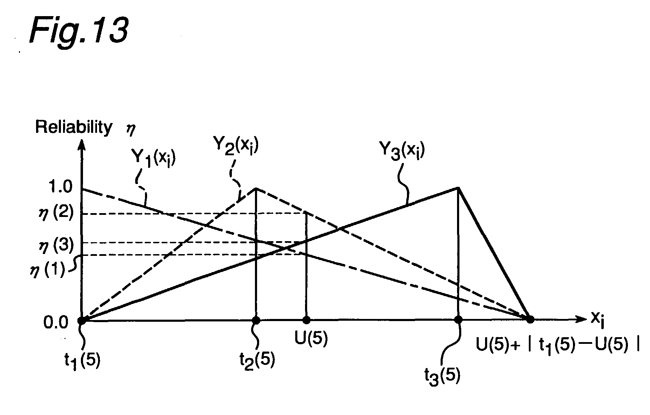

Fig. 13, showing an operation example of the time series signal predicting apparatus of Fig. 11, is a graph showing the reliability $\eta$ versus variation reference amount $x_i$. Fig. 13 illustrates an example in which the number of dimensions of the predictive vector is 5, the number of dimensions of template vectors is 6 and the number K of similar template vectors is K=3. As the variation reference amount $x_i$, a difference between the m-th element $t_i$(m) of the selected vector $t_i$ and the m-th element U(m) of the predictive vector U is used, where $Y_1$(x), $Y_2$(x), $Y_3$(x) are equivalent to the individual membership functions. That is, each of the selected predictive traffic amount candidates $t_i(m+1)$ is multiplied by the reliabilities $\eta(i)$ derived from such membership functions as shown in Fig. 13, and then the result is divided by the sum of the reliabilities $\eta_{sum} = \Sigma\eta(i)$, by which the final predicted traffic amount $u^{t+1}$ is determined:

$$u^{t+1} = \sum_{i=1}^{K} \{\eta(i) \times t_i(m+1)\} / \sum_{i=1}^{K} \eta(i) \qquad (7)$$

Lastly, the operation of the template update deciding section 1202 will be explained. The predictive traffic amount $1111u^{t+1}$ is inputted to the prediction error calculating means 1112. The prediction error calculating means 1112 compares the inputted predicted traffic amount $1111u^{t+1}$ with the actual traffic amount $u(t+1)$ at the time $(t+1)$ to calculate the prediction error $e(t+1) = |u(t+1) - u^{t+1}|$, storing the result into the prediction error storage means 1113. Subsequently, the template update deciding means 1114 decides whether to update the template vector set GT within the template vector set memory 1110. Generally, it is more likely that the time series pattern such as of traffic amount will vary in its pattern characteristics as time goes longer. For this reason, in this preferred embodiment, if the same template vector set is used at all times, the resulting prediction precision would deteriorate as the prediction range becomes longer. Thus, to avoid such occurrence, there has been provided a function of normally checking the prediction precision and updating the template vector set to one matching the current traffic amount pattern.

As the update deciding criteria for the template update deciding means 1114, for example, an average $e_{ave}$ and a standard deviation $e_{delta}$ of prediction errors within a certain time period are used. In this case, the template update deciding means 1114 calculates the average $e_{ave}$ and standard deviation $e_{delta}$ of prediction errors within a certain time period, where when the calculated average $e_{ave}$ and standard deviation $e_{delta}$ of prediction errors exceed previously set threshold values $e_{aveth}$ and $e_{deltath}$, respectively, the template update deciding means 1114 updates the template vector set GT based on the past traffic amount data of up to the time t.

We inventors conducted the following experiment in order to evaluate the operation of the time series signal predicting apparatus in the eighth preferred embodiment constructed as described above. In this experiment, using this time series signal predicting apparatus, we performed on actual traffic amount data a process of predicting tunnel-inflow traffic amount on a superhighway at intervals of twenty minutes, where we evaluated prediction precision, calculation time and storage capacity of the template. Results of this evaluation are shown in Tables 1 and 2:

Table 1

| Coefficient of Correlation between Predicted Traffic Amount and Actual Traffic Amount | | | |
|---|---|---|---|
| | Prior Art Method | Chaos Method | Embodiment Method |
| Data of Small-Size and Up flow | 0.800 | 0.957 | 0.961 |
| Data of Small-Size and Down flow | 0.868 | 0.951 | 0.956 |
| Data of Large-Size and Up flow | 0.706 | 0.842 | 0.854 |
| Data of Large-Size and Down flow | 0.481 | 0.698 | 0.727 |
| Note: Period of evaluation: from December 26 to May 20 Number of dimensions of predictive vector: 5 Period for preparation of template: from August 23 to December 22 | | | |

Table 2

| | Time Required for One-Time Ahead Prediction (millisecond) | Storage Capacity for Template (bytes) |
|---|---|---|
| Conventional Chaos Method | Approximately 100 | Approximately 40000 |
| Preferred Embodiment | Approximately 50 | Approximately 5000 |

The evaluation was done with traffic vehicles in the superhighway classified into the two of large-size vehicles and ordinary- or small-size vehicles, and further with the vehicles divided into those running up through the tunnel and those running down through the tunnel. On condition that the number of dimensions of predictive vector was 5 and that about four-month traffic amount data of from August 23 to December 22 was used as the past traffic amount data set GP, we conducted the performance evaluation on about five-month traffic amount data of from December 26 to May 20.

Table 1 shows the coefficient of correlation between predicted traffic amount and actual traffic amount, while Table 2 shows calculating time necessary for prediction one time ahead as well as the storage capacity of the template used. It is noted here that the prior art method is a method for predicting traffic amount by applying the differentials of the traffic amount of up to the current time from the average of the past few months or the traffic amount of up to the current time to an autoregressive model, and by determining the regression coefficient with a Kalman filter, the prior art method being disclosed in, for example, Japanese Patent Laid-Open Publication No. HEISEI 1-235799. This method is actually used in the prediction of tunnel-inflow traffic amounts of superhighways. Also, the chaos method is an application of a method for performing short-term prediction of time series data by rearranging observed time series data into a multi-dimensional state space with Tackence's embedding theorem that is well known and that is described, for example, in Prior Art Reference 3, "Chaos Application Systems," edited by Kazuyuki AIHARA et al., Asakura Shoten, Section 7 or in Japanese Patent Laid-Open Publication No. HEISEI 7-270200, and by further rearranging the time series data locally with the use of neighboring vectors of data vectors containing the data observed latest.

As apparent from Table 1, it can be seen that the time series signal predicting apparatus of this preferred embodiment has showed greatly superior results in prediction precision in all the four evaluations with the classification into small-size vehicles, large-size vehicles, up data and down data.

Table 2 shows calculation time as well as storage capacity necessary for the template in the case where the calculation is performed with a personal computer equipped with a CPU equivalent to Pentium 133 MHz. These results were obtained under the same conditions as those of the performance evaluation in Table 1, and in the time series signal predicting apparatus of this preferred embodiment, the results were obtained by classifying the past traffic amount data set GP into 1024 subsets. As apparent from Table 2, it can be seen that the time series signal predicting apparatus of this preferred embodiment has showed superiorities also in terms of calculation time and storage capacity. For superhighways, the installation of ventilation equipment for ventilating in the tunnel as well as the automatic control of equipment are indispensable in order to offer safety environments to road users. The automatic control for implementing ventilation was formerly feedback control or level control based on the degree of contamination in the tunnel. However, because these control processes are delay control after the sensing of contaminations, there is a time lag before the effect appears. As a result, it has become the mainstream to perform the feed forward control by predicting the degree of contamination within the tunnel. In this process, for the saving of electric power necessary for ventilation equipment, it is important to properly predict the number of automobiles that pass through the tunnel, and to accurately predict the degree of contamination. From this point of view, the time series signal predicting apparatus of this preferred embodiment plays a great role.

In the above preferred embodiments, the (m+1)-th elements of a plurality of selected template vectors $t_i$ have been corrected by fuzzy rules based on Euclidean distances between a predictive vector, which contains the inputted traffic amount of the current time, and individual selected vectors. However, without being limited to this, the present invention allows the use of a method in which the traffic amount predicting means 1105 selects one template vector $t_{max}$ having the largest similarity and corrects the (m+1)-th element $t_{max}(m+1)$. In this case, a correction amount $d_{m+1}$ for correcting the prediction amount $t_{max}(m+1)$ obtained from the template with the input of differential vectors of up to m-th elements between the predictive vector U and the selected vector $t_{max}$:

$$d = [d_1, d_2, \cdots, d_m]$$
$$= [U(1)\text{-}t_{max}(1), U(2)\text{-}t_{max}(2), \cdots, U(m)\text{-}t_{max}(m)]$$

is calculated.

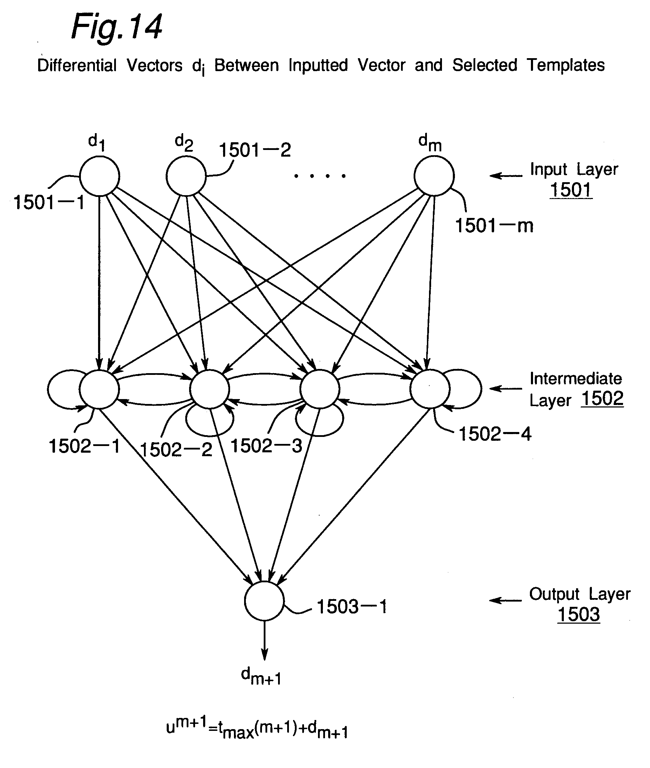

Fig. 14 is an arrangement diagram of a neural network constituting the traffic amount predicting means 1105 of Fig. 11. This neural network is a recurrent neural network comprising:

(a) an input layer 1501 having a plurality of m units 1501-1 to 1501-m;
(b) an intermediate layer 1502 comprising four units 1502-1 to 1502-4 each having a self feedback connection; and
(c) an output layer 1503 having one unit 1503-1.

In this arrangement, the input to the input layer 1501 includes vectors of traffic amount data to be inputted and template vectors selected by the similar template vector selecting means.

A recurrent neural network having such a feedback connection can be used as the traffic amount predicting means 1105 after being subjected to a training process by using a known method disclosed in, for example, Prior Art Reference 4, J.T. Connor et al., "Recurrent Neural Networks and Robust Time Series Prediction," IEEE transactions on Neural Networks, Vol. 5, No. 2, pp. 240-254, 1994. In this way, by previously training the neural network on the correction amount from the template, and by using its ability for non-linear applications, it becomes possible to predict actual traffic amounts even with low similarities between inputted predictive vector and prepared template vectors.

In the above-described embodiments, memory and storage means are implemented, for example, by hard disk units or other storage units, and means other than the memory and storage means are implemented, for example, by digital or other computers.

Industrial Applicability:

As described above, according to the present invention, there is provided a time series signal predicting apparatus comprising:

vector generating means for generating n-dimensional vector data based on a natural number of n time series data sampled every regular time intervals and inputted;

further vector generating means for generating (n+1)-dimensional vector data based on past time series data sampled every regular time intervals and inputted, and classifying the vector data into a plurality of L vector sets in units of similar vectors by using vector data of up to the n-th dimension;

vector storage means for storing the n-dimensional input vector data generated by the vector generating means;

vector set storage means for storing the (n+1)-dimensional vector data generated by the further vector generating means in units of a plurality of L classified vector sets;

vector classifying means for classifying the vector data stored in the vector storage means according to which vector set out of the vector sets stored in the vector set storage means the vector data belong to;

vector selecting means for selecting a plurality of k vector data from a vector set belonging to the vector sets to which the vector data stored in the vector storage means have been decided to belong, in a descending order of similarities to vector data of newly inputted time series data;

past data extracting means for extracting a plurality of k (n+1)-th-dimensional data from a plurality of k (n+1)-dimensional vectors belonging to the vector set selected by the vector selecting means, and outputting the extracted data together with the similarities; and

data predicting means for predicting and outputting time series data of a next time point succeeding to the inputted time series data based on the plurality of k data extracted by the past data extracting means, the input vector data stored in the vector storage means and the similarities.

Therefore, according to the present invention, the time series signal predicting apparatus is enabled to achieve a high-precision time series signal prediction with simple construction, as compared with the apparatus of the prior art, and moreover to predict a time series signal at high precision even upon occurrence of changes in statistical properties of time series signals.

**Claims**

1. A time series signal predicting apparatus comprising:

vector generating means for generating n-dimensional vector data based on a natural number of n time series data sampled every regular time intervals and inputted;

further vector generating means for generating (n+1)-dimensional vector data based on past time series data sampled every regular time intervals and inputted, and classifying the vector data into a plurality of L vector sets in units of similar vectors by using vector data of up to the n-th dimension;

vector storage means for storing the n-dimensional input vector data generated by said vector generating means;

vector set storage means for storing the (n+1)-dimensional vector data generated by said further vector generating means in units of a plurality of L classified vector sets;

vector classifying means for classifying the vector data stored in said vector storage means according to which vector set out of the vector sets stored in said vector set storage means the vector data belong to;

vector selecting means for selecting a plurality of k vector data from a vector set belonging to the vector sets to which the vector data stored in said vector storage means have been decided to belong, in a descending order of similarities to vector data of newly inputted time series data;

past data extracting means for extracting a plurality of k (n+1)-th-dimensional data from a plurality of k (n+1)-dimensional vectors belonging to the vector set selected by said vector selecting means, and outputting the extracted data together with the similarities; and

data predicting means for predicting and outputting time series data of a next time point succeeding to the inputted time series data based on the plurality of k data extracted by said past data extracting means, the input vector data stored in said vector storage means and the similarities.

2. The time series signal predicting apparatus as claimed in Claim 1, further comprising:

vector updating means for updating vector data having lower similarities in the set to which the vector data stored in said vector storage means belong, so that the vector data having lower similarities are replaced with latest input vector data.

3. A time series signal predicting apparatus comprising:

vector generating means for generating n-dimensional vector data based on a natural number of n time series data sampled every regular time intervals and inputted;

further vector generating means for generating (n+1)-dimensional vector data based on past time series data sampled every regular time intervals and inputted, and classifying the vector data into a plurality of L vector sets in units of similar vectors by using vector data of up to the n-th dimension;

vector storage means for storing the n-dimensional input vector data generated by said vector generating means;

vector set storage means for storing the (n+1)-dimensional vector data generated by said further vector generating means in units of a plurality of L classified vector sets;

vector classifying means for classifying the vector data stored in said vector storage means according to which vector set out of the vector sets stored in said vector set storage means the vector data belong to;

vector updating means for updating vector data having lower similarities in the set to which the vector data stored in said vector storage means belong, so that the vector data having lower similarities are replaced with latest input vector data;

further vector selecting means for outputting vector data having the highest similarity to n-dimensional input vector data of newly inputted time series data, together with their similarities, from a vector set belonging to vector sets to which the vectors stored in said vector storage means have been decided to belong;

differential vector deriving means for calculating n-dimensional differential vectors between vector data read from said vector storage means and vectors outputted from said further vector selecting means; and

further data predicting means for predicting and outputting time series data corresponding to the (n+1)-th-dimension of the inputted vector data based on the n-dimensional differential vectors calculated by said differential vector deriving means and vectors representing the similarities outputted from said further vector selecting means.

4. The time series signal predicting apparatus as claimed in Claim 2, further comprising:

set division deciding means for deciding whether to divide the vector set based on distribution of the similarities between the vector data within the vector set selected by said vector selecting means and the input vector data;

set dividing means for, when the vector set to which vector data inputted by said set division deciding means belong has been decided to be divided, dividing the vector set into a plurality of vector sets; and

vector set updating means for updating the vector sets stored in said vector storage means so that the vector sets are replaced with the vector sets resulting from the division by said set dividing means.

5. A time series signal predicting apparatus comprising:

a vector generating means for generating n-dimensional vector data based on a natural number of n time series data sampled every regular time intervals and inputted;

further vector generating means for generating (n+1)-dimensional vector data based on past time series data sampled every regular time intervals and inputted, and classifying the vector data into a plurality of L vector sets in units of similar vectors by using vector data of up to the n-th dimension;

vector storage means for storing the n-dimensional input vector data generated by said vector generating means;

vector set storage means for storing the (n+1)-dimensional vector data generated by said further vector generating means in units of a plurality of L classified vector sets;

vector classifying means for classifying the vector data stored in said vector storage means according to which vector set out of the vector sets stored in said vector set storage means the vector data belong to;

vector selection number determining means for calculating similarities between typical vector data, which typify the vector sets stored in said vector set storage means, and latest vector data stored in said vector storage means, and determining a vector selection number for vectors to be selected from each of the vector sets according to the similarities;

further vector selecting means for selecting the vector selection number of vector data from each of the vector sets stored in said vector set storage means according to level of their similarities based on the vector selection number determined by said vector selection number determining means;

past data extracting means for extracting a plurality of k (n+1)-th-dimensional data from a plurality of k (n+1)-dimensional vectors belonging to the vector set selected by said vector selecting means, and outputting the extracted data together with the similarities; and

data predicting means for predicting and outputting time series data of a next time point succeeding to the inputted time series data based on the plurality of k data extracted by said past data extracting means, the input vector data stored in said vector storage means and the similarities;

set division deciding means for deciding whether to divide the vector set based on distribution of the similarities between the vector data within the vector set selected by said further vector selecting means and the input vector data;

set dividing means for, when the vector set to which vector data inputted by said set division deciding means belong has been decided to be divided, dividing the vector set into a plurality of vector sets; and

vector set updating means for updating the vector sets stored in said vector storage means so that the vector sets are replaced with the vector sets resulting from the division by said set dividing means.

6. The time series signal predicting apparatus as claimed in Claim 1, further comprising:

number of vector-selections storage means for storing a number of selections resulting when vector sets to which the input vector data stored in said vector storage means belong have been selected by said vector selecting means;

vector set deleting means for, when the number of selections recorded in said time of selection storage means is smaller than a specified permissible number of selections, deleting a relevant vector set;

set division deciding means for deciding whether to divide the vector set based on distribution of the similarities between the vector data within the vector set selected by said vector selecting means and the input vector data;

set dividing means for, when the vector set to which vector data inputted by said set division deciding means belong has been decided to be divided, dividing the vector set into a plurality of vector sets; and

vector set updating means for updating the vector sets stored in said vector storage means so that the vector sets are replaced with vector sets resulting from the division by said set dividing means.

7. The time series signal predicting apparatus as claimed in Claim 1, further comprising:

time of vector-selection storage means for storing a latest time at which each vector set has been selected by said vector selecting means;

vector set deleting means for deleting vector sets of which the time stored by said time of vector-selection storage means is older than a specified permissible time set by referencing the current time;

set division deciding means for deciding whether to divide the vector set based on distribution of the similarities between the vector data within the vector set selected by said vector selecting means and the input vector data;

set dividing means for, when the vector set to which vector data inputted by said set division deciding means belong has been decided to be divided, dividing the vector set into a plurality of vector sets; and

vector set updating means for updating the vector sets stored in said vector storage means so that the vector sets are replaced with vector sets resulting from the division by said set dividing means.

8. The time series signal predicting apparatus as claimed in Claim 1, further comprising:

intra-set vector updating means for, on a target of a vector set to which it has been determined by said vector classifying means the input vector data belong, when said vector selecting means selects a plurality of m vectors based on the similarities, updating a vector of the lowest similarity stored in said vector set storage means at an input time of the succeeding time series data so that the vector having the lowest similarity is replaced with newly inputted vector data;

set division deciding means for deciding whether to divide the vector set based on distribution of the similarities between the vector data within the vector set selected by said vector selecting means and the input vector data;

set dividing means for, when the vector set to which vector data inputted by said set division deciding means belong has been decided to be divided, dividing the vector set into a plurality of vector sets; and

vector set updating means for updating the vector sets stored in said vector storage means so that the vector sets are replaced with vector sets resulting from the division by said set dividing means.

9. The time series signal predicting apparatus according to any one of Claims 1, 2 and 4 through 8,

wherein said data predicting means predicts time series data of the next time succeeding to inputted time series data by using a weighting addition method which employs the similarities as weighting addition factors.

10. The time series signal predicting apparatus according to any one of Claims 1, 2 and 4 through 8,

wherein said data predicting means predicts time series data of the next time succeeding to inputted time series data by using a neural network comprising:

an input layer whose input is a plurality of k (n+1)-th dimensional data outputted from said past data extracting means and the similarities;
an intermediate layer of at least one layer; and
an output layer.

11. The time series signal predicting apparatus according to any one of Claims 1, 2 and 4 through 8,

wherein said data predicting means predicts time series data of the next time succeeding to inputted time series data by using a linear prediction method.

12. The time series signal predicting apparatus as claimed in Claim 3,

wherein said further data predicting means predicts time series data of the next time succeeding to inputted time series data by using a neural network comprising:

an input layer whose input is n-dimensional differential vectors calculated by said differential vector deriving means and vectors representing similarities outputted from said further vector selecting means;
an intermediate layer of at least one layer; and
an output layer.

13. The time series signal predicting apparatus as claimed in Claim 3,

wherein said data predicting means predicts time series data of the next time succeeding to inputted time series data by using a linear prediction method.

14. The time series signal predicting apparatus according to any one of Claims 1 through 8,

wherein said vector classifying means classifies vector data stored in said vector storage means into a plurality of vector sets based on Euclidean distances between the vector data.

15. The time series signal predicting apparatus according to any one of Claims 1 through 8,

wherein said vector classifying means classifies vector data stored in said vector storage means into a plurality of vector sets based on the vector data and by using a clustering method.

16. A time series signal predicting apparatus comprising:

a traffic amount data set memory for preparatorily storing a past traffic amount data set;
pattern vector creating means for creating a plural (m+1)-dimensional pattern vectors representing variation patterns in time-elapsing order from the past traffic amount data set preparatorily stored in the traffic amount data set memory;
vector classifying means for dividing the past pattern vectors created by said pattern vector creating means into a plurality of subsets;
template vector set memory for storing a template vector set composed of vectors typifying the subsets classified by said vector classifying means;
predictive vector creating means for creating a plural m-dimensional predictive vector by adding traffic amount data u(t-m+1), u(t-m+2), $\cdots$, u(t-2), u(t-1) of past plural (m-1) time points to traffic amount data u(t) of the current time t;
similar template vector selecting means for selecting (m+1)-dimensional template vectors having the highest similarities to the predictive vector by using template vector sets stored in the template vector set memory;
input variation amount deriving means for calculating differential vectors of up to m-th elements between the similar template vectors selected by said similar template vector selecting means and the predictive vector, and further calculating a variation reference amount from the differential vectors and outputting results thereof;

traffic amount predicting means for making a prediction by extracting (m+1) elements of a plurality of k (m+1)-dimensional vectors selected by said similar template vector selecting means;

predictive amount correcting means for calculating a final predicted traffic amount of traffic amount at time (t+1) by correcting the plurality of k traffic amount data extracted by said traffic amount predicting means based on the variation reference value calculated from the differential vectors between the predictive vector and the similar template vectors by said input variation amount deriving means, and then outputting the result as a predicted traffic amount;

prediction error calculating means for calculating an error between the traffic amount u(t+1) at the actual time (t+1) and the predicted traffic amount;

prediction error storage means for storing the prediction errors calculated by said prediction error calculating means, the prediction errors being of a specified number of time points; and

template update deciding means for deciding whether to update the template vector set memory based on circumstances of changes in the past prediction errors stored in said prediction error storage means, and when it has been decided to make an update, updating the template vector set stored in the template vector set memory based on traffic amount data of up to time t.

17. The time series signal predicting apparatus as claimed in Claim 16,
wherein the vector classifying means classifies the past pattern vectors into a plurality of subsets by using a vector quantization method or a learning vector quantization method.

18. The time series signal predicting apparatus as claimed in Claim 16,
wherein said predictive amount correcting means calculates a final predicted traffic amount of traffic amount at time (t+1) by correcting the plurality of k traffic amount data by using specified fuzzy rules.

19. The time series signal predicting apparatus as claimed in Claim 16,
wherein said predictive amount correcting means calculates a final predicted traffic amount of traffic amount at time (t+1) by correcting the plurality of k traffic amount data, which is achieved by selecting one template vector having the highest similarity and correcting its (m+1)-th element.

20. The time series signal predicting apparatus as claimed in Claim 16,
wherein said traffic amount predicting means predicts (m+1) elements of a plurality of k (m+1)-dimensional vectors selected by said similar template vector selecting means by using a neural network which comprises:

an input layer whose input is vectors of the traffic amount data to be inputted and template vectors selected by said similar template vector selecting means;
an intermediate layer of at least one layer; and
an output layer.

# *Fig.1*

First Preferred Embodiment

Time Series Data
101 — 1

Past Time Series Data
101 — 2

102 — 1 — **Vector Generating Means**

**Further Vector Generating Means** — 102 — 2

n—Dimensional Vector Data V

(n+1)—Dimensional Vector Data

103 — **Vector Storage Means**

**Vector Set Storage Means** — 104

105 — **Vector Classifying Means**

**Vector Selecting Means** — 106

**Past Data Extracting Means** — 107

$\{U^i_{n+1}, R^i\}$

108 — **Data Predicting Means**

Predicted Time Series Data
109

# Fig.2

Second Preferred Embodiment

Time Series Data
101-1

Past Time Series Data
101-2

102-2

Further Vector
Generating Means

102-1 — Vector Generating
Means

n—Dimensional
Vector Data V

201

(n+1)—Dimensional
Vector Data

104

103 — Vector Storage
Means

Vector Updating
Means

Vector Set Storage
Means

105 — Vector Classifying
Means

106 — Vector Selecting
Means

107

Past Data
Extracting Means

$\{U^i_{n+1}, R^i\}$

108 — Data Predicting
Means

Predicted Time Series Data
109

# Fig.3

Third Preferred Embodiment

Time Series Data
101−1

Past Time Series Data
101−2

102−1 — | Vector Generating Means |

102−2 — | Further Vector Generating Means |

n−Dimensional Vector Data V

$(n+1)$−Dimensional Vector Data

201

104

103 — | Vector Storage Means |

| Vector Updating Means |

| Vector Set Storage Means |

| Vector Classifying Means | ~105

| Further Vector Selecting Means | 301

$\{U^{max}\}$

302 — | Differential Vector Deriving Means |

Differential Vecor
=[d1,d2,···dn]

$\{U^{max}, R^{max}\}$

303 — | Further Data Predicting Means |

Predicted Time Series Data
304

## *Fig.4*   Further Data Predicting Means 303

Past Vector

Differential Vector

$u_{n+1}^{max}$  401−1

$r^{max}$  401−2

$d_1$  401−3

$d_2$  401−4

$d_{n-1}$  401−(K−1)

$d_n$  401−K

402−1

402−2

402−L

403−1

$V_{n+1}$

Predicted (n+1)−th Time Series Data

Input Layer
401

Intermediate Layer
402

Output Layer
403

# Fig.5

Fourth Preferred Embodiment

## Fig.6

Fifth Preferred Embodiment

Time Series Data
101-1

Past Time Series Data
101-2

102-1 — Vector Generating Means

Further Vector Generating Means — 102-2

n—Dimensional Vector Data V

(n+1)—Dimensional Vector Data

103 — Vector Storage Means

Vector Set Storage Means — 104

105 — Vector Classifying Means

Vector Selection Number Determining Means — 601

Further Vector Selecting Means — 602

Past Data Extracting Means — 107

$\{U^{sj}_{n+1}, R^{sj}\}$

108 — Data Predicting Means

Set Division Decididing Means — 501

Set Dividing Means — 502

Predicted Time Series Data
109

Vector Set Updating Means — 503

# Fig.7

Sixth Preferred Embodiment

Time Series Data
101−1

Past Time Series Data
101−2

102−1 — Vector Generating Means

Further Vector Generating Means — 102−2

n−Dimensional Vector Data V

(n+1)−Dimensional Vector Data

103 — Vector Storage Means

Vector Set Storage Means — 104

105 — Vector Classifying Means

Vector Selecting Means — 106

107 — Past Data Extracting Means

Number of Vector Selection Storage Means — 701

$\{U^{sj}_{n+1}, R^{sj}\}$

Vector Set Deleting Means — 702

108 — Data Predicting Means

Set Division Decididing Means — 501

Set Dividing Means — 502

Predicted Time Series Data
109

Vector Set Updating Means — 110

# Fig.8

## Modification of Sixth Preferred Embodiment

Time Series Data
101-1

Past Time Series Data
101-2

102-1 — Vector Generating Means

Further Vector Generating Means — 102-2

n—Dimensional Vector Data V

(n+1)—Dimensional Vector Data

103 — Vector Storage Means

Vector Set Storage Means — 104

105 — Vector Classifying Means

Vector Selecting Means — 106

107 — Past Data Extracting Means

Time of Vector Selection Storage Means — 801

$\{U^{sj}_{n+1}, R^{sj}\}$

Vector Set Deleting Means — 702

108 — Data Predicting Means

Set Division Decididing Means — 501

Set Dividing Means — 502

Predicted Time Series Data
109

Vector Set Updating Means — 110

# Fig.9

Seventh Preferred Embodiment

Time Series Data
101—1

Past Time Series Data
101—2

102—1 — Vector Generating Means

Further Vector Generating Means ~102—2

n—Dimensional Vector Data V

(n+1)—Dimensional Vector Data

103 — Vector Storage Means

Vector Set Storage Means ~104

105 — Vector Classifying Means

106

Vector Selecting Means

Past Data Extracting Means

107

Intra-Set Vector Updating Means ~901

$\{U^{sj}_{n+1}, R^{sj}\}$

108 — Data Predicting Means

Set Division Decididing Means ~501

Set Dividing Means ~502

Predicted Time Series Data
109

Vector Set Updating Means ~110

## Fig.10  Data Predicting Means 108

Vector 1
$$u_{n+1}^{s1}$$
$$r^{s1}$$

Vector 2
$$u_{n+1}^{s2}$$
$$r^{s2}$$

Vector m
$$u_{n+1}^{sm}$$
$$r^{sm}$$

1001—1
1001—2
1001—3
1001—4
1001—(2m—1)
1001—2m

1002—1
1002—2
1002—L

1003—1

Predicted (n+1)—th Time Series Data 304

Input Layer 1001

Intermediate Layer 1002

Output Layer 1003

## Fig.11

Eighth Preferred Embodiment

Prediction Preparing Section 1200

1107 Past Traffic Amount Data Set Memory

1108 Pattern Vector Creating Means

1109 Vector Classifying Means

1110 Template Vector Set Memory

u(t)

Traffic Amount Data 1101

Prediction Executing Section 1201

Predictive Vector Creating Means — 1102

1103

Similar Template Vector Selecting Means

1104 Input Variation Amount Deriving Means

1105 Traffic Amount Predicting Means

Predictive Amount Correcting Means — 1106

Predicted Traffic Amount 1111
$u^{t+1}$

1112 Prediction Error Calculating Means

Template Update Deciding Section 1202

1113 Prediction Error Storage Means

1114 Template Update Deciding Means

Not Update

Update

## Fig.12

(a) Past Traffic Amount

(b) Past Traffic Amount

(c) Past Traffic Amount

VQ Method for Rearranging them based on Proximities among Vectors

$V_1$ $V_2$ → $T_1$

$T_2 = V_3$

(d) Template Vector

(e) Template Vector

## Fig.13

# Fig.14

Differential Vectors $d_i$ Between Inputted Vector and Selected Templates

$d_1$ $d_2$ 1501−2 $d_m$ ← Input Layer 1501

1501−1

1501−m

1502−1 1502−2 1502−3 1502−4 ← Intermediate Layer 1502

1503−1 ← Output Layer 1503

$d_{m+1}$

$$u^{m+1} = t_{max}(m+1) + d_{m+1}$$

## *Fig.15  PRIOR ART*

## INTERNATIONAL SEARCH REPORT

| International application No. |
|---|
| PCT/JP97/00010 |

**A. CLASSIFICATION OF SUBJECT MATTER**

Int. Cl$^6$  G06F17/00

According to International Patent Classification (IPC) or to both national classification and IPC

**B. FIELDS SEARCHED**

Minimum documentation searched (classification system followed by classification symbols)

Int. Cl$^6$  G06F17/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 7-288931, A (Mitsubishi Electric Corp.), October 31, 1995 (31. 10. 95)(Family: none) | 1 - 20 |
| A | JP, 7-239838, A (Meidensha Corp.), September 12, 1995 (12. 09. 95)(Family: none) | 1 - 20 |
| A | JP, 6-175998, A (Nippon Telegraph & Telephone Corp.), June 24, 1994 (24. 06. 94)(Family: none) | 10, 12, 20 |

☐ Further documents are listed in the continuation of Box C.    ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| April 15, 1997 (15. 04. 97) | April 30, 1997 (30. 04. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)